# EUROPÄISCHE PATENTSCHRIFT

(11) **EP 2 152 617 B1**
(45) Veröffentlichungstag und Bekanntmachung des Hinweises auf die Patenterteilung: **19.10.2011**
(21) Anmeldenummer: 08735033.6
(22) Anmeldetag: 04.04.2008
(51) Int. Cl.: B65G 65/23, B65G 67/46

(54) **VORRICHTUNG UND VERFAHREN ZUM ENTLADEN VON GEGENSTÄNDEN AUS EINEM BEHÄLTER**
APPARATUS FOR, AND METHOD OF, UNLOADING ARTICLES FROM A CONTAINER
DISPOSITIF ET PROCÉDÉ POUR DÉCHARGER DES ARTICLES SITUÉS DANS UN CONTENANT

(30) Priorität: 25.05.2007 DE 102007024670
(43) Veröffentlichungstag der Anmeldung: 17.02.2010
(73) Patentinhaber: Deutsche Post AG, 53113 Bonn (DE)
(72) Erfinder: OTT, Rainer, 56745 Volkesfeld (DE); SCHMATZ, Johann Josef, 53881 Euskirchen (DE); KREMER, Erwin, 46342 Velen (DE)
(74) Vertreter: Jostarndt, Hans-Dieter
(86) Internationale Anmeldenummer: PCT/EP2008/002708
(87) Internationale Veröffentlichungsnummer: WO 2008/145223

(56) Entgegenhaltungen:
- EP-A- 1 389 597
- US-A- 4 802 810
- US-A1- 2004 022 608

## Beschreibung

Die Erfindung betrifft eine Vorrichtung zur Entladung von Gegenständen, insbesondere Postpaketen, aus einem Behälter gemäβ dem Oberbegriff des Anspruchs 1, wie sie aus der US 4 802 810 A bekannt ist. Der Behälter weist wenigstens eine Ladeöffnung auf, und die Vorrichtung umfasst eine Aufnahmeeinrichtung zur Aufnahme des Behälters und eine Kippeinrichtung zum Kippen des aufgenommenen Behälters um eine horizontale Achse.

Die Erfindung betrifft ferner ein zugehöriges Verfahren zur Entladung von Gegenständen aus einem Behälter gemäβ dem Oberbegriff des Anspruchs 8.

Im Bereich der Entladung von Gütern aus Behältern sind verschiedene Vorrichtungen bekannt, bei denen der Behälter in eine Kippvorrichtung eingebracht wird, um die Gegenstände aus dem Behälter auszukippen. Diese Vorgehensweise kommt insbesondere bei Schüttgut, wie beispielsweise Pulvern, Granulaten, Flüssigkeiten und landwirtschaftlichen Erzeugnissen zur Anwendung. Dabei kann sich die Kippvorrichtung bereits auf einem Transportfahrzeug befinden, welches seinen Laderaum mittels der Kippvorrichtung an einer Seite anhebt, um so das geladene Schüttgut zu entladen. Das Schüttgut kann dabei von einer Fördereinrichtung aufgefangen werden, welche das Gut weiterbefördert.

In einer alternativen Ausführungsform wird ein Laderaum, wie ein befüllter Container, von einem Transportfahrzeug entnommen und in eine stationäre Kippvorrichtung eingebracht, um das geladene Gut durch Kippen zu entleeren.

Insbesondere im postalischen Bereich werden ebenfalls große Mengen an Postsendungen in Behältern transportiert und an verschiedenen Stationen umgeschlagen. Zu den Postsendungen gehören sowohl flache Briefsendungen als auch Pakete mit kleinem, mittlerem oder großem Volumen. Dabei sollen die Postsendungen üblicherweise an einer ersten Umschlagstation möglichst effektiv in einen Behälter eingebracht und an einer zweiten Station wieder aus diesem entnommen werden. Um manuelle Tätigkeiten zu reduzieren, sind für verschiedene Transportbehälter aus dem Stand der Technik Vorrichtungen bekannt, die ebenfalls das Prinzip des Kippens eines Behälters einsetzen.

Der Transport von Postsendungen kann beispielsweise mit Paketrollbehältern erfolgen, die aus einem verfahrbaren Rahmengestell mit Laufrädern bestehen, in welches Pakete eingebracht werden können. Um das manuelle Entnehmen von Paketen aus einem solchen Rollbehälter zu vermeiden, schlägt die deutsche Offenlegungsschrift DE 33 31 898 A1 eine Kippanlage mit einem schwenkbaren Führungsrahmen und einem darin angeordneten verstellbaren Aufnahme-Hubrahmen vor. Hydraulikzylinder heben den Paketrollbehälter an und durch die so erzeugte Kippbewegung fallen die geladenen Pakete auf ein darunter laufendes Förderband.

Ein Problem beim Entladen von Behältern mit Postpaketen durch eine Kippvorrichtung liegt in der möglichen Beschädigung der Pakete beim Kippen. Die europäische Patentschrift EP 0 562 688 B1 offenbart daher eine Vorrichtung zur Entleerung eines Behälters für Postpakete, mit der die Wahrscheinlichkeit einer Beschädigung der Pakete während des Entladens verringert werden soll. Die Vorrichtung weist ein Gestell zur Aufnahme des Behälters, einen Entladeförderer zum Abtransport entladener Pakete und ein Entladetor auf, das schwenkbar im Gestell aufgehängt ist. Das Gestell kann zusammen mit einem eingestellten Behälter gekippt werden, wobei das Entladetor beim Entladen von Paketen aufschwenkt und der Behälter so über dem Förderband entleert werden kann. Das Entladetor selbst ist im Gestell mittels Schwenkvorrichtungen um eine Schwenkachse drehbar, die außerhalb der Ebene des Entladetors liegt. Die Vorrichtung kann ergänzt werden durch Seitenwände des Behälters, die um eine Achse vertikal zum Behälterboden drehbar sind. Durch das Zusammenwirken des schwenkbaren Entladetores mit den ebenfalls schwenkbaren Seitenwänden werden Pakete auf dem Förderband abgelegt, wodurch die Fallhöhe reduziert und Aufwölbungen von mehreren feststeckenden Paketen vermieden werden sollen.

Beim Transport von Postsendungen wie Paketen kommen als Ladeeinheiten jedoch nicht nur Rollcontainer, sondern auch größere Container zum Einsatz, die per LKW, Zug, Flugzeug oder Schiff transportiert werden können. Solche Container werden beispielsweise als Wechselbehälter bezeichnet, wobei typische Maße eines solchen Wechselbehälters in der Größenordnung von 7m x 2,5m x 2,5m liegen. Ein Logistiksystem umfasst üblicherweise eine Vielzahl von Wechselbehältern, die stets annähernd vollständig mit Paketen beladen und zwischen mehreren Zielorten transportiert werden. Die Behälter sind an einer offenen Seite mit einem Sektionaltor oder einer Doppelflügeltür ausgestattet und können so von Personen betreten oder beispielsweise mit Hubwagen befahren werden.

Bei der Beladung werden die Pakete manuell auf dem Boden des Wechselbehälters aufgestapelt, wobei die Beladung im hinteren Teil des Behälters beginnt und sich nach vorne fortsetzt. Üblichweise ergibt sich so eine Art Haufen von Paketen. Da große Pakete als Basis unten gestapelt werden, während kleinere Pakete obenauf gelegt werden, ist der Haufen üblicherweise am Boden breiter als an der Spitze.

Da nicht immer die Anzahl von Paketen transportiert wird, die zur vollständigen Ausfüllung eines Wechselbehälters notwendig ist, reicht der Stapel an Paketen möglicherweise nicht bis direkt an das hintere Tor, sondern endet in einem Abstand zum Tor, wobei die Front des Paketstapels typischerweise schräg nach hinten in den Behälterinnenraum verläuft. Damit die Pakete beim Transport nicht nach hinten gegen das geschlossene Heckrollo rutschen und beschädigt werden, ist eine Transportsicherung vorzusehen. Dabei handelt es sich üblicherweise um ein Netz, das vor die Front aus Paketen gespannt wird. Alternativ können Stangen zwischen den Seitenwänden eingehängt werden, welche die Pakete sichern.

Zur Entladung werden die Pakete manuell wieder aufgenommen und auf ein Förderband gelegt, welches den weiteren Transport übernimmt. Dies stellt eine immer wiederkehrende körperliche Tätigkeit mit hohem Zeitaufwand dar. Wendet man jedoch bekannte Kippvorrichtungen für diese Art von Wechselbehälter an, rutschen und fallen Pakete beim Kippen des Behälters so stark, dass sie beschädigt werden können. Dies kann durch die bekannten Kippvorrichtungen nicht verhindert werden.

Aufgabe der Erfindung ist es daher, eine verbesserte Entladevorrichtung für Gegenstände, insbesondere Postpakete, bereitzustellen, welche die Wahrscheinlichkeit einer Beschädigung der Gegenstände bei einer Entladung durch Kippen erheblich weiter reduziert. Dabei sollen bereits vorhandene, standardisierte Wechselbehälter ohne Umbauten am Wechselbehälter selbst verwendet werden können.

Erfindungsgemäß wird diese Aufgabe durch eine Entladevorrichtung gemäß den Merkmalen des unabhängigen Anspruches 1 gelöst. Vorteilhafte Weiterbildungen der Vorrichtung ergeben sich aus den Unteransprüchen 2-7. Die Aufgabe wird ferner durch ein Verfahren nach Anspruch 8 gelöst. Vorteilhafte Ausführungsformen des Verfahrens ergeben sich aus den Unteransprüchen 9-15.

Die erfindungsgemäße Vorrichtung zur Entladung von Gegenständen, insbesondere Postpaketen, aus einem Behälter mit wenigstens einer Ladeöffnung umfasst eine Aufnahmeeinrichtung zur Aufnahme des Behälters und eine Kippeinrichtung zum Kippen eines aufgenommenen Behälters um eine horizontale Achse. Die Vorrichtung weist eine Auffangvorrichtung auf, die Mittel zur räumlichen Ausweitung der Auffangvorrichtung in die Ladeöffnung des Behälters hinein aufweist. Die Auffangvorrichtung ist über eine Führung in eine Position unterhalb des Behälterbodens eines in der Vorrichtung aufgenommenen Behälters verfahrbar, in der die Auffangvorrichtung die Ladeöffnung nicht verdeckt.

Vorzugsweise ist die Auffangvorrichtung über die Führung in einem rechten Winkel zum Behälterboden eines in der Vorrichtung aufgenommenen Behälters in eine Position unterhalb des Behälterbodens verfahrbar, in der die Auffangvorrichtung die Ladeöffnung nicht verdeckt.

In einem Ausführungsbeispiel der Erfindung umfasst die Auffangvorrichtung eine Prallplatte, die wenigstens zwei Prallplattensegmente aufweist, die vom Behälterboden eines in der Vorrichtung aufgenommenen Behälters aus gesehen übereinander angeordnet sind. Dabei sind die Prallplattensegmente über eine oder mehrere Verstelleinrichtungen innerhalb der Ladeöffnung bewegbar und die Prallplattensegmente sind kippbar an der zugehörigen Verstelleinrichtung gelagert.

Beispielsweise sind die Prallplattensegmente unabhängig voneinander über eine dem jeweiligen Prallplattensegment zugeordnete Verstelleinrichtung innerhalb der Ladeöffnung bewegbar. Die Prallplattensegmente können auch über eine gemeinsame Verstelleinrichtung innerhalb der Ladeöffnung bewegbar sein, wobei ein erstes Prallplattensegment in direkter Verbindung mit dieser Verstelleinrichtung steht, während zwischen diese Verstelleinrichtung und ein zweites Prallplattensegment ein weiterer Verstellantrieb geschaltet ist.

Vorzugsweise sind die Prallplattensegmente mit einem stoßdämpfenden Material versehen. Eine Verstelleinrichtung kann durch eine Hubeinrichtung oder eine angetriebene Scherenkonstruktion gebildet werden.

In einem weiteren Ausführungsbeispiel umfasst die Auffangvorrichtung einen Luftsack, der mittels einer Druckluftversorgung mit einem gasförmigen Medium befüllbar ist, wobei der Luftsack so angeordnet ist, dass er bei der Befüllung mit einem gasförmigen Medium in Richtung des Innenraumes eines in der Vorrichtung aufgenommenen Behälters aufblähbar ist.

Die Aufnahmeeinrichtung zur Aufnahme des Behälters umfasst wenigstens ein Auflager, welches sich entlang einer Hauptachse erstreckt und um diese Hauptachse schwenkbar gelagert ist. Bei dem Auflager kann es sich um ein Winkelprofil handeln.

Ferner umfasst die Aufnahmeeinrichtung zur Aufnahme des Behälters vorzugsweise zwei Träger, wobei die Träger ebenfalls um die Hauptachse schwenkbar gelagert sind. An den Trägern greift jeweils wenigstens eine Kippeinrichtung an. Die Träger können entlang der Hauptachse verfahrbar ausgebildet sein. Die Träger können zusätzlich oder alternativ dazu jeweils um eine Achse schwenkbar sein, welche durch die Hauptachse verläuft und senkrecht zu der Ebene steht, die durch die Träger und die Hauptachse aufgespannt wird.

Bei der Kippeinrichtung kann es sich beispielsweise um eine Hubeinrichtung, einen Kettenzug oder einen Seilzug handeln. Vorzugsweise sind an den Trägern Greifeinrichtungen mit jeweils einem festen oder schwenkbar gelagerten Stützgreifer zum Anheben des Behälters angebracht.

Von der Erfindung umfasst ist ferner ein Verfahren zur Entladung von Gegenständen, insbesondere Postpaketen, aus einem Behälter mit wenigstens einer Ladeöffnung, bei dem der Behälter in eine Aufnahmeeinrichtung zur Aufnahme des Behälters eingebracht wird und der so aufgenommene Behälter mittels einer Kippeinrichtung um eine horizontale Achse gekippt wird. Erfindungsgemäß erfolgt vor dem Kippvorgang eine räumliche Ausweitung einer Auffangvorrichtung in die Ladeöffnung des in der Aufnahmeeinrichtung aufgenommenen Behälters. Nach dem Kippvorgang wird die räumliche Ausweitung der Auffangvorrichtung wieder zurückgeführt, bis sich die Auffangvorrichtung außerhalb des Behälters befindet. Die Auffangvorrichtung wird daraufhin in eine Position unterhalb des Behälterbodens eines in der Vorrichtung aufgenommenen Behälters verfahren, in der die Auffangvorrichtung die Ladeöffnung nicht verdeckt.

Vorzugsweise wird die Auffangvorrichtung über die Führung in einem rechten Winkel zum Behälterboden eines in der Vorrichtung aufgenommenen Behälters in eine Position unterhalb des Behälterbodens verfahren, in der die Auffangvorrichtung die Ladeöffnung nicht verdeckt.

Umfasst die Auffangvorrichtung eine Prallplatte, die wenigstens zwei Prallplattensegmente aufweist, die vom Behälterboden eines in der Vorrichtung aufgenommenen Behälters aus gesehen übereinander angeordnet sind, werden diese Prallplattensegmente für eine räumliche Ausweitung und die Rückführung der räumlichen Ausweitung der Auffangvorrichtung über eine oder mehrere Verstelleinrichtungen innerhalb der Ladeöffnung bewegt.

Dabei können die Prallplattensegmente unabhängig voneinander über eine dem jeweiligen Prallplattensegment zugeordnete Verstelleinrichtung innerhalb der Ladeöffnung bewegt werden. Alternativ können beide Prallplattensegmente über eine gemeinsame Verstelleinrichtung innerhalb der Ladeöffnung bewegt werden, wobei ein erstes Prallplattensegment durch eine direkte Verbindung mit dieser Verstelleinrichtung bewegt wird, während ein zweites Prallplattensegment zusätzlich über einen zwischen diese Verstelleinrichtung und das zweite Prallplattensegment geschalteten weiteren Verstellantrieb bewegt wird.

Umfasst die Auffangvorrichtung einen Luftsack, wird dieser für eine räumliche Ausweitung der Auffangvorrichtung mittels einer Druckluftversorgung mit einem gasförmigen Medium befüllt, wobei sich der Luftsack bei der Befüllung mit einem gasförmigen Medium in Richtung des Innenraums des Behälters aufbläht. Für eine Rückführung der räumlichen Ausweitung der Auffangvorrichtung wird das gasförmige Medium aus dem Luftsack abgelassen oder abgesaugt.

Vorzugsweise wird ein Behälter auf einem Auflager abgesetzt und die Auffangvorrichtung räumlich in die Ladeöffnung des Behälters ausgeweitet. Daraufhin wird der Behälter durch eine Kippeinrichtung angehoben und dabei um eine horizontale Hauptachse gekippt. Die räumliche Ausweitung der Auffangvorrichtung wird zurückgeführt, bis sich die Auffangvorrichtung außerhalb des Behälters befindet. Die Auffangvorrichtung wird daraufhin in eine Position unterhalb des Behälterbodens des in der Vorrichtung aufgenommenen Behälters verfahren, in der die Auffangvorrichtung die Ladeöffnung nicht verdeckt.

In einem Ausführungsbeispiel der Erfindung werden nach dem Absetzen des Behälters auf dem Auflager zwei Träger auf den Behälter zu bewegt. An jedem der Träger wird wenigstens eine Greifeinrichtung mit jeweils einem Stützgreifer unterhalb des Behälterbodens positioniert und die Kippeinrichtung leitet zum Anheben des Behälters eine Kraft an den Trägern ein.

Die Träger können dazu entlang der Hauptachse in Richtung des Behälters verfahren werden. Alternativ oder zusätzlich dazu können die Träger jeweils um eine Achse auf den Behälter zu geschwenkt werden, welche durch die Hauptachse verläuft und senkrecht zu der Ebene steht, die durch die Träger und die Hauptachse aufgespannt wird.

Ein wesentlicher Vorteil der Erfindung liegt in der Möglichkeit zur schnellen Entladung eines Behälters, ohne dass dazu zeitaufwendige manuelle Tätigkeiten erforderlich sind. Die zu entladenden Gegenstände können durch die Erfindung als Schüttgut behandelt werden, wobei gleichzeitig eine schonende Behandlung ohne Beschädigung der Gegenstände ermöglicht wird. Insbesondere Verpackungen oder Postpakete können so auf eine schnelle Weise entladen werden, ohne dass diese Gegenstände großen Fallhöhen ausgesetzt sind, bei denen es zu Beschädigungen kommen kann.

Sowohl eine Ausführungsform der Erfindung mit einer segmentierten Prallplatte als auch eine Ausführungsform mit einem Luftsack gewährleisten, dass auch ungleichmäßig gestapelte Gegenstände so abgefangen werden können, dass keine großen Fallhöhen auftreten. Ferner kann eine segmentierte Prallplatte mit davor angebrachten Luftkissen kombiniert werden, um die Vorteile beider Ausführungsformen nutzen zu können.

Eine segmentierte Prallplatte hat dabei den Vorteil, dass annähernd der gesamte Querschnitt des Wechselbehälterinnenraums mit den einzelnen Plattensegmenten abgedeckt werden kann, auch wenn die Prallplatte schräg steht. Somit können Gegenstände auch im oberen Bereich des Behälters abgefangen werden. Durch die Segmentierung lässt sich die Plattenfläche so vergrößern und verkleinern, wie es die jeweilige Position der Prallplatte erfordert.

Durch die schichtweise Entladung der Gegenstände über die gesamte Breite der Ladeöffnung eines Behälters ist ferner gewährleistet, dass Gegenstände schnell entladen werden können, ohne dass es dabei zu Aufwölbungen kommt, bei denen sich Gegenstände ineinander verkeilen und festhängen.

Die Erfindung ermöglicht ferner eine gleichmäßige Beaufschlagung von angebundenen Förderbändern mit Gegenständen. Die Absenkung der Prallplatte bzw. des Luftsacks kann gezielt mit der Geschwindigkeit erfolgen, die erforderlich ist, um ein daran angeschlossenes Förderband zum Abtransport der Gegenstände möglichst optimal auszulasten.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine Seitenansicht eines besonders bevorzugten Ausführungsbeispiels der erfindungsgemäßen Entladevorrichtung in der Ruheposition;
- Fig. 2: eine Draufsicht auf eine Vorrichtung gemäß Fig. 1;
- Fig. 3: Detailansichten (a) und (b) einer Aufnahmeeinrichtung zur Aufnahme eines Wechselbehälters;
- Fig. 4: eine Vorrichtung gemäß Fig. 1 mit eingebrachtem Wechselbehälter;
- Fig. 5: eine Vorrichtung gemäß Fig. 1 mit Prallplatte im Betriebszustand;
- Fig. 6: eine Vorrichtung gemäß Fig. 1 mit ausgefahrenen Prallplattensegmen- ten;
- Fig. 7: eine Vorrichtung gemäß Fig. 1 mit ausgefahrenen Prallplattensegmen- ten und gekipptem Wechselbehälter;
- Fig. 8: eine Vorrichtung gemäß Fig. 1 mit gekipptem Wechselbehälter und eingefahrener Prallplatte;
- Fig. 9: eine Vorrichtung gemäß Fig. 1 mit gekipptem Wechselbehälter und Förderbändern zum Abtransport oberer Lagen an Gegenständen;
- Fig. 10: eine Vorrichtung gemäß Fig. 1 mit gekipptem Wechselbehälter und Förderbändern zum Abtransport mittlerer Lagen an Gegenständen;
- Fig. 11: eine Vorrichtung gemäß Fig. 1 mit gekipptem Wechselbehälter und Förderbändern zum Abtransport unterer Lagen an Gegenständen;
- Fig. 12: eine Vorrichtung gemäß Fig. 1 mit gekipptem Wechselbehälter und Förderbändern zum Abtransport der untersten Lage an Gegenständen;
- Fig. 13: ein Ausführungsbeispiel der erfindungsgemäßen Vorrichtung mit einem Seilzug/Kettenzug;
- Fig. 14: ein Ausführungsbeispiel der erfindungsgemäßen Vorrichtung mit Prall- platte und einem ausgefahrenen Luftsack;
- Fig. 15: eine Vorrichtung gemäß Fig. 14 mit eingezogenem Luftsack:
- Fig. 16: eine Vorrichtung gemäß Fig. 14 mit einem Luftsack und Förderbändern zum Abtransport von Gegenständen;
- Fig. 17: in schematischer Darstellung in Abbildung a) eine Rückansicht der Vor- richtung gemäß Fig. 1 mit nach außen gefahrenen Trägern und in Ab- bildung b) eine Rückansicht der Vorrichtung gemäß Fig. 1 mit aufge- nommenem Behälter; und
- Fig. 18: ein Ausführungsbeispiel für eine Anordnung von Verstelleinrichtungen mit einer Scherenkonstruktion.

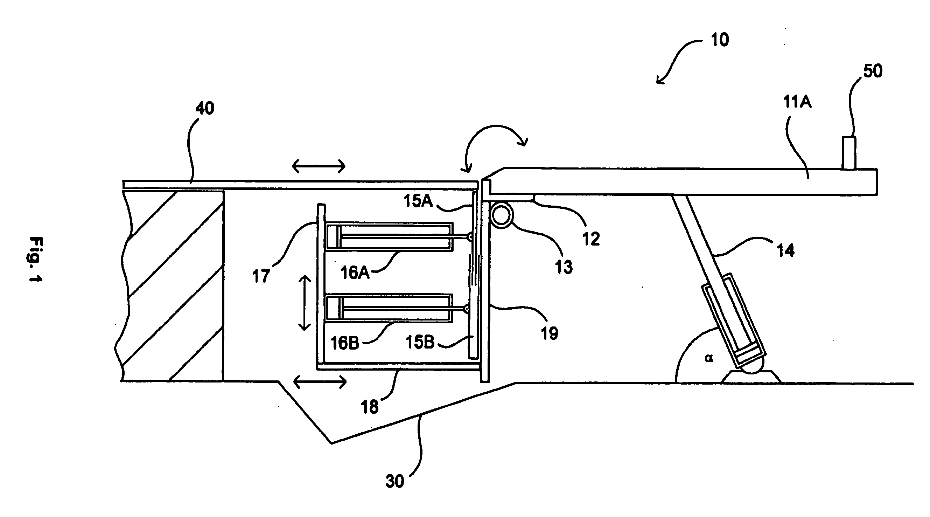

In Fig. 1 ist ein besonders bevorzugtes Ausführungsbeispiel der erfindungsgemäßen Vorrichtung zum Entladen von Gegenständen aus einem Behälter dargestellt. Bei dem Behälter oder Container handelt es sich vorzugsweise um einen so genannten Wechselbehälter, der aus verschiedenen Logistikbereichen bekannt ist, in denen Gegenstände transportiert und an unterschiedlichen Stationen umgeschlagen werden. Das zugehörige Verfahren zum Betrieb der erfindungsgemäßen Entladevorrichtung wird ebenfalls anhand dieser und weiterer Figuren erläutert.

Der Behälter 20 weist in dem dargestellten Ausführungsbeispiel einen Behälterboden 26, Seitenwände und eine obere Abdeckung auf. Der Behälter umfasst wenigstens eine Entladeöffnung 25, über die der Zugriff auf das Innere des Behälters möglich ist. In dem in den Figuren dargestellten Ausführungsbeispiel ist der Behälter 20 quaderförmig ausgebildet und er weist an einem der kurzen Enden eine Entladeöffnung 25 auf, die mit einem Heckrollo 21 verschlossen werden kann. Als Alternative zu einem hinteren Heckrollo in Form eines Sektionaltors kann auch eine Doppelflügeltür mit zwei seitlich angebrachten Drehflügeltüren vorgesehen sein.

Boden, Seitenwände und obere Abdeckung des Behälters sind zweckmäßigerweise starr ausgebildet und können beispielsweise aus Stahl, Leichtmetall, Holz, Kunststoff oder Kombinationen davon bestehen. Insbesondere die Seitenwände und die obere Abdeckung können ferner durch ein Stangengerüst gebildet werden, das mit Planen bespannt ist.

Bei den in dem Behälter transportierten Gegenständen 22 handelt es sich im Wesentlichen um kastenförmige Körper wie Schachteln, Kartons oder sonstige Verpackungen. Insbesondere handelt es sich dabei um Postpakete, die von einem Logistikunternehmen angenommen, transportiert und bei einem Empfänger zugestellt werden. Die Erfindung ist jedoch nicht auf die Entladung von Postpaketen beschränkt.

Das Volumen der Gegenstände ist zumindest so groß, dass sie sich für einen Einzeltransport in einem Wechselbehälter eignen. Flache Briefsendungen werden üblicherweise nicht einzeln in einem Wechselbehälter transportiert, sondern zuvor in Sammelbehälter eingebracht, die nicht durch Kippen aus einem Wechselbehälter entleert werden können. Die Erfindung eignet sich somit vielmehr für Postsendungen ab Päckchengröße oder sonstige Verpackungen eines bestimmten Volumens.

Die Entladevorrichtung 10 ist beispielsweise an der Außenseite eines Gebäudes angebracht, an dem Wechselbehälter 20 von Lastkraftwagen angeliefert und dort entladen werden. Die Vorrichtung kann jedoch auch innerhalb eines Gebäudes oder vollständig im Freien eingesetzt werden. Die Entladevorrichtung ist vorzugsweise fest montiert, sie kann jedoch bei entsprechend stabiler Auslegung auch mobil ausgeführt sein.

Ist die Entladevorrichtung an der Außenseite eines Gebäudes angebracht, weist das Gebäude vorzugsweise bekannte Formen von Toren auf, an denen Wechselbehälter angeliefert werden. Sind mehrere Tore vorhanden, kann die erfindungsgemäße Vorrichtung beispielsweise an allen oder nur an einer ausgewählten Anzahl von Toren vorgesehen sein. Ein Tor kann verschiedene Formen von Überladebrücken aufweisen, mit denen der Abstand zwischen dem Gebäude und einem angelieferten Wechselbehälter überbrückt wird, um eine Entladung zu ermöglichen.

In dem in Fig. 1 dargestellten Ausführungsbeispiel ist die Entladevorrichtung 10 fest an einem Tor eines Gebäudes angebracht. Das Tor des Gebäudes befindet sich in einem Abstand zu der Bodenebene, auf der Lastkraftwagen Wechselbehälter anliefern. Vor dem Tor befindet sich eine Abdeckung 40, mit der die Entladevorrichtung 10 vollständig oder teilweise abdeckbar ist. Die Abdeckung ist vorzugsweise begehbar ausgebildet und kann beispielsweise ausfahrbar sein.

An dem Gebäudekörper selbst oder an einer Konstruktion vor dem Gebäude ist eine Hauptachse 13 angebracht, die um eine horizontale Achse drehbar gelagert ist. Da bei Betrieb der Entladevorrichtung das Gewicht des Wechselbehälters 20 auf dieser Hauptachse und damit den Lagern lastet, müssen diese entsprechend ausgelegt sein. Die Hauptachse 13 ist am Gebäude beispielsweise so positioniert, dass die Abdeckung 40 im ausgefahrenen Zustand bis zur Hauptachse oder darüber hinaus reichen kann, wie es in Fig. 1 dargestellt ist.

Mit der Hauptachse 13 ist ein Auflager 12 fest verbunden, das somit ebenfalls um eine horizontale Achse drehbar gelagert ist. Das Auflager 12 befindet sich in der Ruheposition der Vorrichtung oberhalb der Hauptachse 13. Das Auflager wird beispielsweise durch ein Winkelprofil gebildet, dessen erster Schenkel an der Hauptachse 13 angebracht ist, wobei dieser untere Schenkel in der Ruheposition der Entladevorrichtung in der Seitenansicht horizontal verläuft. Der zweite Schenkel des Profils verläuft in der Ruheposition der Vorrichtung vertikal. Ein Wechselbehälter, der von einem Lastkraftwagen in die Vorrichtung angeliefert wird, kann auf dem unteren Schenkel abgesetzt werden, während der vertikale Schenkel als Anschlag dient, um die Lage des Wechselbehälters in horizontaler Richtung zu begrenzen.

Das Auflager 12 hat vorzugsweise eine Länge, die wenigstens der Breite der Seite des Wechselbehälters entspricht, in der sich die Ladeöffnung befindet. So kann der Wechselbehälter mit seiner gesamten Breite auf dem Auflager abgesetzt werden.

Vorzugsweise wird ein Wechselbehälter so an der Entladevorrichtung ausgerichtet, dass sich ein Förderband beim Entladevorgang mittig vor dem Wechselbehälter befindet. Um eine genaue Ausrichtung des Wechselbehälters in der Entladevorrichtung und insbesondere auf dem Auflager zu erleichtern, kann die gesamte Entladevorrichtung 10 mit der Hauptachse 13 durch einen Antrieb horizontal verfahrbar ausgeführt sein. Der Wechselbehälter wird in diesem Fall möglichst genau von einem Lastkraftwagen positioniert, durch ein Verfahren der Entladevorrichtung an dieser Position abgeholt und nach Anheben des Wechselbehälters in die angestrebte Position verfahren.

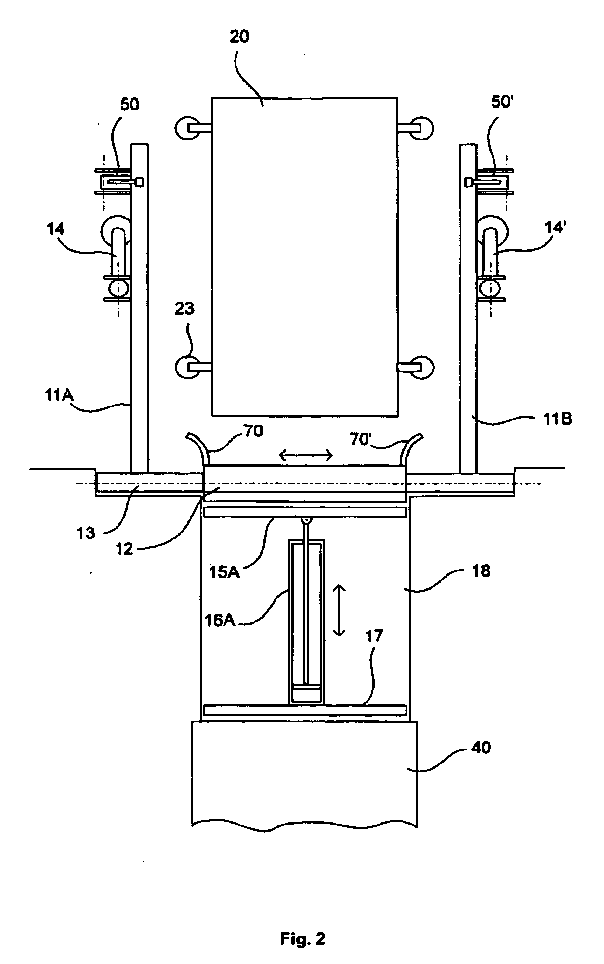

In einem weiteren Ausführungsbeispiel der Erfindung sind an den Enden des Auflagers 12 Seitenführungen 70 und 70' vorgesehen, wie sie in Fig. 2 dargestellt sind. Die Führungen weisen nach außen und sind abgerundet. Das Auflager ist horizontal frei beweglich auf der Hauptachse gelagert, was beispielsweise durch ein oder mehrere Gleitlager realisiert werden kann. Wird ein Wechselbehälter nicht mittig zwischen den beiden Seitenführungen eingebracht, drückt er gegen eine der Seitenführungen. Dadurch wird das Auflager entlang der Hauptachse bewegt, bis es mittig vor dem Wechselbehälter steht. Nach Anheben des Wechselbehälters kann der Behälter ebenfalls in die angestrebte Position verfahren werden.

Falls das angebundene Förderband zum Abtransport entladener Gegenstände breit genug ist, ist möglicherweise keine genaue Zentrierung des Wechselbehälters erforderlich. In diesem Fall wird der Wechselbehälter mit einer bestimmten Toleranz abgestellt und der Entladevorgang kann auch in dieser leicht versetzten Position ausgeführt werden. Dadurch ist eine freie oder angetriebene Verschiebung des Auflagers 12 entlang der Hauptachse 13 gegebenenfalls nicht erforderlich.

Ebenfalls an der Hauptachse 13 sind zwei Träger 11A und 11B beispielsweise in Form von Tragrohren angebracht. Diese Anordnung ist der Draufsicht in Fig. 2 zu entnehmen. Die Träger haben in etwa die Länge eines aufzunehmenden Wechselbehälters 20 und sind an einem Ende mit der Hauptachse 13 verbunden. Jeder Träger ist somit zusammen mit der Hauptachse 13 um eine horizontale Achse schwenkbar.

Ferner ist jeder Träger vorzugsweise entlang der Hauptachse 13 verschiebbar gelagert, so dass der Abstand zwischen den beiden Trägern variiert werden kann. Um einen Wechselbehälter 20 in der Entladevorrichtung 20 aufzunehmen, werden die Träger 11A und 11B entlang der Hauptachse 13 nach außen verfahren. Der Wechselbehälter wird auf dem Auflager 12 abgesetzt und die Träger daraufhin wieder in Richtung des Wechselbehälters verfahren. Dies kann manuell oder zweckmäßigerweise mit in den Figuren nicht dargestellten Antrieben erfolgen.

In einem weiteren Ausführungsbeispiel, das nicht in den Figuren dargestellt ist, sind die Träger um eine Achse drehbar, die durch die Hauptachse 13 verläuft und senkrecht zu der Ebene steht, welche durch die Hauptachse 13 und die Träger aufgespannt wird. Die Träger werden nach außen geschwenkt, um einen Behälter auf dem Auflager 12 abzusetzen, und nach innen auf den Behälter zu geschwenkt, um den Behälter aufzunehmen. Dies kann ebenfalls manuell oder über Antriebe erfolgen.

Jeder Träger 11A und 11 B weist jeweils eine Greifeinrichtung 50 und 50' zur Aufnahme des Wechselbehälters auf. Die Greifeinrichtung ist in der Nähe des von der Hauptachse 13 wegweisenden Endes des Trägers angebracht.

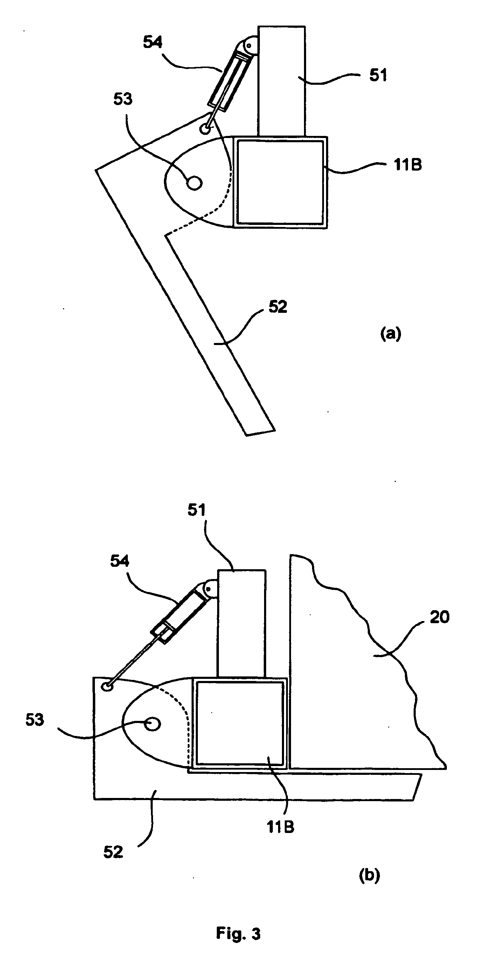

Fig. 3 zeigt in den Abbildungen (a) und (b) ein mögliches Ausführungsbeispiel für eine Greifeinrichtung 50'. Dabei handelt es sich im Wesentlichen um einen Stützgreifer 52, der in einer Aufhängung 53 an dem Träger 11 B angebracht ist und der dadurch unter den Boden eines Wechselbehälters 20 geschwenkt werden kann. Es besteht die Möglichkeit, den Stützgreifer ohne Schwenkfunktion auszubilden und ihn stattdessen fest an einem Träger anzubringen. In diesem Fall muss der Wechselbehälter jedoch stets so in der Höhe positioniert, werden, dass der Greifer beim Zusammenfahren der Träger 11 A, 11 B unter den Boden des Wechselbehälters geschoben werden kann.

Um einen fest montierten Stützgreifer unter den Boden des Wechselbehälters schieben zu können, kann die gesamte Entladevorrichtung zusätzlich vertikal verfahrbar ausgebildet sein, so dass Höhendifferenzen durch eine vertikale Verschiebung der gesamten Vorrichtung ausgeglichen werden können. Ferner ist es möglich, dass die Träger 11A und 11 B leicht um die Hauptachse 13 nach unten gekippt werden, so dass die daran angebrachten Stützgreifer unter den Behälterboden geschoben werden können. Vor dem Kippvorgang werden die Träger durch die jeweilige Kippeinrichtung leicht angehoben, bis die Stützgreifer den Behälterboden von unten berühren und der Behälter angehoben werden kann.

Eine weitere mögliche Ausführungsform stellt ein schwenkbarer Stützgreifer 52 dar, der an einem Träger 11 B um eine Achse geschwenkt werden kann, die in Richtung der Längsachse des Trägers verläuft. Der Stützgreifer ist somit schwenkbar an dem Träger gelagert und kann manuell oder mit einer Verstelleinrichtung 54 zwischen verschiedenen Positionen geschwenkt werden. Bei der Verstelleinrichtung 54 handelt es sich beispielsweise um einen Hydraulikantrieb, wie er beispielhaft in Fig. 3 dargestellt ist. Der Antrieb 54 kann am Träger selbst oder für einen ausreichenden Hub an einem Ausleger 51 angebracht sein.

In Abbildung (a) von Fig. 3 ist der Stützgreifer in der Ruheposition dargestellt. In dieser Position kann ein Wechselbehälter 20 zwischen den beiden Trägern 11A und 11 B aufgenommen und die Träger nach innen verfahren werden. Die Träger sind dabei in der Höhe so angebracht, dass sie den Behälter 20 im unteren Bereich der Seitenwand des Wechselbehälters berühren. Sobald die Träger eine vorgegebene Position erreicht haben, wird jeder Stützgreifer 52 in der Aufhängung 53 nach unten geschwenkt, so dass sich ein ausreichender Teil des Greifers unterhalb des Wechselbehälters 20 befindet, um diesen anheben zu können. Um beim Anheben des Wechselbehälters die Kräfte auf den Antrieb 54 zu reduzieren, kann der Stützgreifer in der geschwenkten Position arretiert werden. Diese Arretierung ist in Fig. 3 nicht dargestellt, kann jedoch auf bekannte Weise hergestellt werden. Ferner kann mehr als eine Greifeinrichtung an einem Träger vorgesehen werden.

An jedem Träger 11 A, 11 B greift wenigstens eine Kippeinrichtung 14, 14' an, mit der ein in der Vorrichtung aufgenommener Wechselbehälter 20 um die Hauptachse 13 gekippt werden kann, wenn er an einer Seite auf dem Auflager 12 aufliegt. In dem in Fig. 1 dargestellten Ausführungsbeispiel ist als Kippeinrichtung jeweils eine hydraulische Hubeinrichtung vorgesehen, die sich ungefähr in der Mitte jedes Trägers befindet. Die Hubeinrichtungen 14 und 14' stützen sich nach unten hin am festen Boden ab, so dass die beiden Träger 11A, 11 B und damit der darauf befindliche Wechselbehälter angehoben werden können.

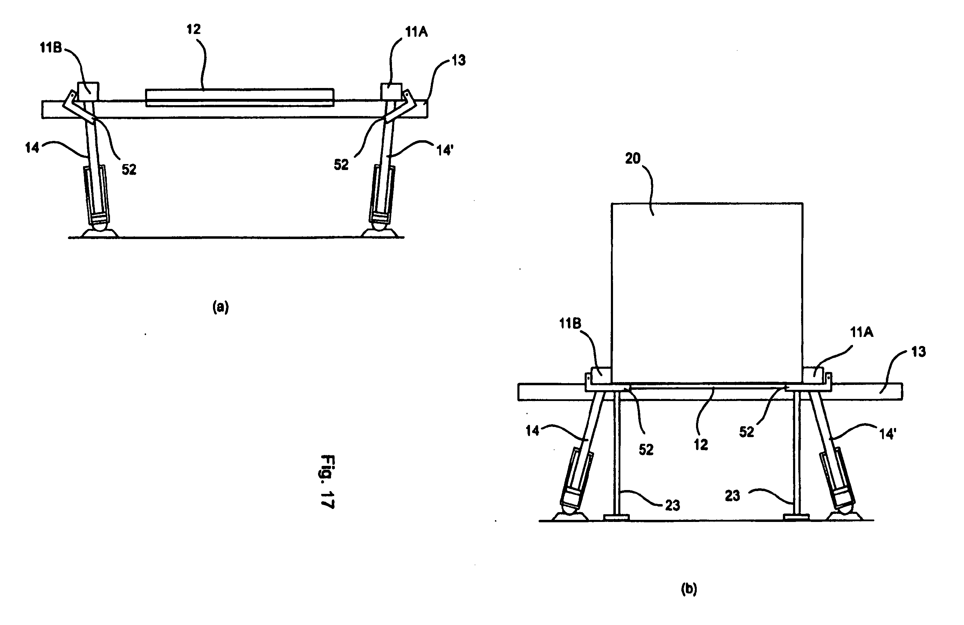

Die Hubeinrichtungen sind vorzugsweise so am Boden angebracht, dass sich ihre jeweilige Basis nach außen versetzt neben den Trägern befindet, wenn diese am Wechselbehälter anliegen. Wird ein Behälter mittels der Hubeinrichtungen angehoben, wird somit eine nach innen gerichtete Kraft aufgebracht. Dies ist in Abbildung (b) in Fig. 17 dargestellt, in der ein Wechselbehälter 20 von der Rückseite aus gesehen abgebildet ist. Sind die Träger nach außen entlang der Hauptachse 12 verfahren, um einen Wechselbehälter in die Anlage einbringen zu können, befindet sich die jeweilige Basis einer Hubeinrichtung beispielsweise unterhalb eines Trägers oder nach innen versetzt neben den Trägern, wie es in Abbildung (a) in Fig. 17 dargestellt ist.

Ferner ist jede Hubeinrichtung mit ihrer Basis in einem solchen Abstand zur Hauptachse 13 angeordnet, dass sie auf die Träger 11A und 11B eine Kraft schräg nach oben in Richtung der Hauptachse 13 aufbringen kann. Eine Hubeinrichtung steht somit in der Seitenansicht, wie sie in Fig. 1 dargestellt ist, in einem Winkel □ < 90° zur Bodenfläche.

Die Hubeinrichtungen 14, 14' sind am Boden in mehreren Achsen kippbar ausgeführt, so dass sie ihre Stellung an die verschiedenen Bewegungen der Träger anpassen können. Auch die Verbindung einer Hubeinrichtung mit einem Träger ist in mehreren Achsen kippbar ausgeführt. Dies kann beispielsweise durch ein in den Figuren nicht zeichnerisch dargestelltes kardanisches Gelenk realisiert werden.

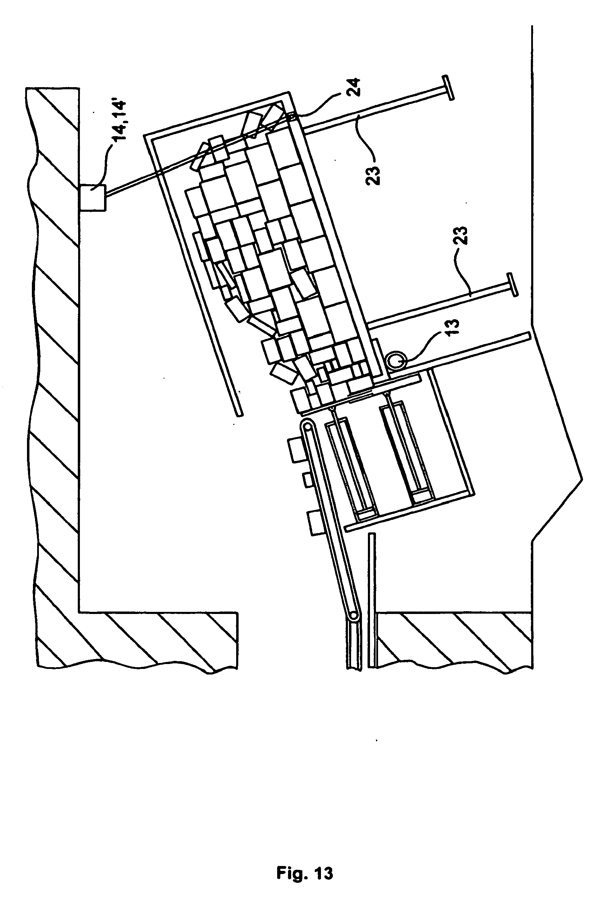

In einem weiteren Ausführungsbeispiel der Erfindung wird als Kippvorrichtung ein Seil- oder Kettenzug verwendet, der an den Trägern der Entladevorrichtung eingehakt wird. Es besteht ferner die Möglichkeit, einen Seil- oder Kettenzug direkt an dem Wechselbehälter 20 einzuhaken. Bei dieser Ausführung sind keine seitlichen Träger erforderlich, sondern der Wechselbehälter wird auf dem hinteren Auflager 12 abgesetzt und der Seilzug wird manuell in beispielsweise bereits vorhandene ISO-Corner-Castings im hinteren Bereich des Wechselbehälters eingehängt. Eine solche Anordnung ist beispielhaft in Fig. 13 dargestellt. Beim Kippvorgang bewirkt der angehobene Behälter ein Drehen des Auflagers 12 um die Hauptachse 13. Dazu kann der Behälter ferner temporär am Auflager befestigt werden. Dies kann beispielsweise über weitere ISO-Corner-Castings erfolgen, die sich in diesem Bereich des Behälters befinden.

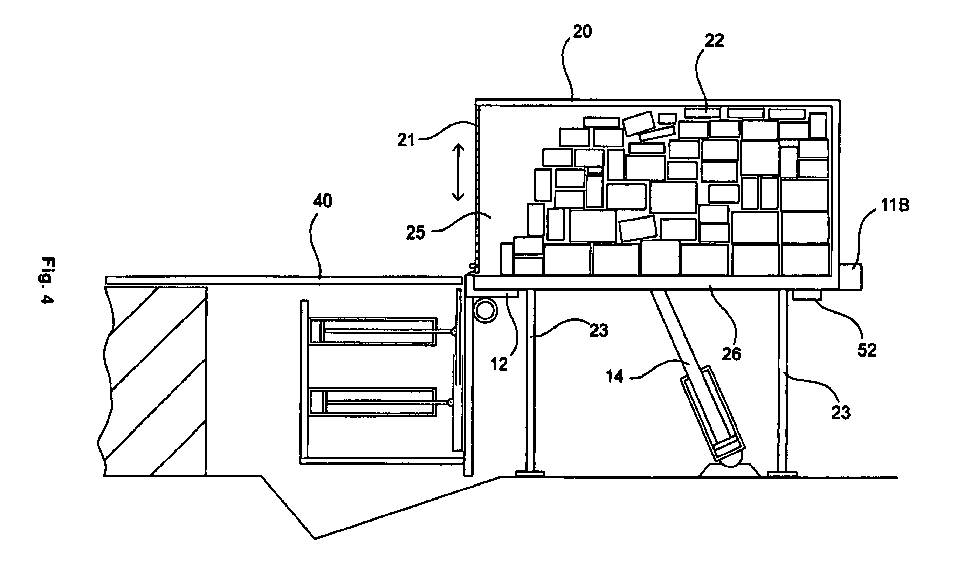

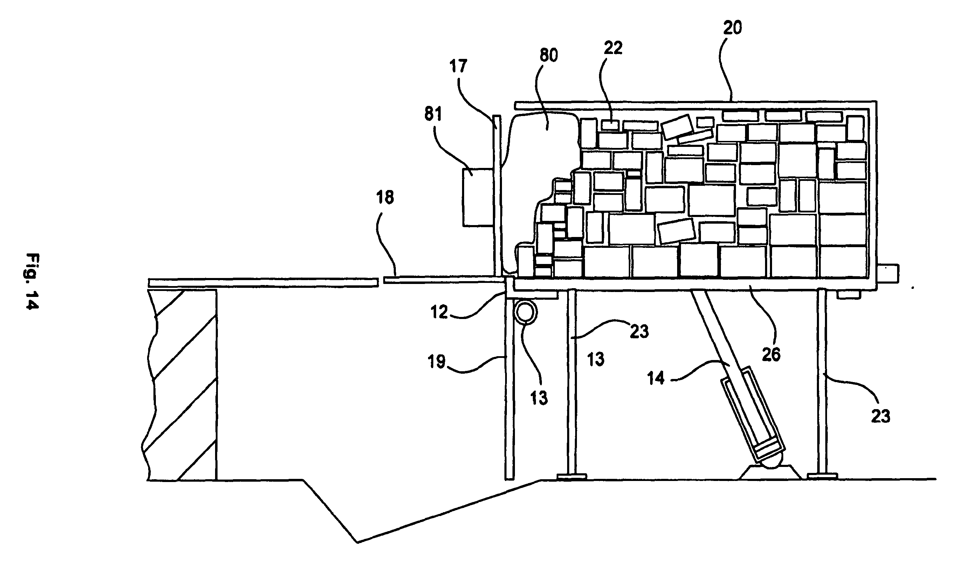

Die Entladevorrichtung 10 umfasst erfindungsgemäß eine Auffangvorrichtung, die räumlich in die Ladeöffnung 25 ausgeweitet werden kann. Diese Auffangvorrichtung dient zum Abfangen der Gegenstände 22 beim Kippvorgang. In einem besonders bevorzugten Ausführungsbeispiel der Erfindung handelt es sich bei der Auffangvorrichtung um eine Prallplatte, die aus mehreren Prallplattensegmenten 15A und 15B besteht. Dieses Ausführungsbeispiel ist in den Figuren 1-13 dargestellt. Die Figuren 14-16 zeigen ein Ausführungsbeispiel, bei der die Auffangvorrichtung als Luftsack ausgebildet ist. Beide Ausführungsformen können auch kombiniert werden.

In beiden Ausführungsbeispielen ist die Auffangvorrichtung an einer Basiskonstruktion angebracht. Die jeweilige Auffangvorrichtung steht dazu beispielsweise mit einer Rückplatte 17 in Verbindung, die wiederum auf einer Grundplatte 18 angebracht ist. In der Ruheposition der Entladevorrichtung 10 steht die Rückplatte 17 vertikal, während die Grundplatte 18 horizontal verläuft. Die Grundplatte 18 ist an einer Führung 19 angebracht, über welche die Grundplatte zusammen mit der Rückplatte 17, und somit der gesamten Auffangvorrichtung, in einem rechten Winkel zum Boden 26 eines aufgenommenen Behälters in eine Position unterhalb des Behälterbodens 26 bewegt werden kann.

Für die Ruheposition der Entladevorrichtung wird die Auffangvorrichtung vorzugsweise entlang der Führung 19 nach unten und die Abdeckung 40 bis zum Auflager 12 oder darüber hinaus verfahren, wie es in Fig. t dargestellt ist. In einem weiteren Ausführungsbeispiel der Erfindung verfügt die Auffangvorrichtung im oberen Bereich über eine eigene Abdeckplatte, so dass die Abdeckung 40 nur bis zu dieser ausgefahren werden muss.

Bei der Führung 19 handelt es sich beispielsweise um eine oder mehrere Führungsschienen, in denen die Grundplatte verschoben werden kann. Die Führung 19 ist fest mit der Hauptachse 13 verbunden, so dass sich die Führung zusammen mit der Hauptachse drehen lässt. Somit ist auch die gesamte Auffangvorrichtung um die horizontale Achse der Hauptachse 13 schwenkbar. Die Rückplatte 17 ist vorzugsweise entlang der Grundplatte 18 bewegbar, so dass die daran befindliche Auffangvorrichtung in den Laderaum des Behälters verschoben werden kann. Dies kann ebenfalls über Führungsschienen erreicht werden.

Die in den Figuren 1-13 dargestellte Auffangvorrichtung in Form einer Prallplatte weist wenigstens zwei Prallplattensegmente 15A und 15B auf. Jedes Prallplattensegment ist jeweils über eine separate Verstelleinrichtung 16A und 16B, die an der Rückplatte 17 angebracht ist, innerhalb der Ladeöffnung 25 bewegbar. Diese Bewegung erfolgt im Wesentlichen parallel zum Behälterboden 26, wobei sich die Prallplatte im Sinne dieser Erfindung räumlich in die Ladeöffnung 25 ausweitet. Als Verstelleinrichtung kann beispielsweise eine Hubeinrichtung oder eine angetriebene Scherenkonstruktion vorgesehen sein.

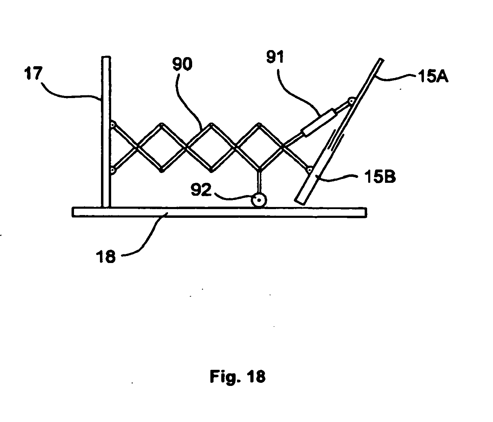

In einem weiteren Ausführungsbeispiel der Erfindung, das schematisch in Fig. 18 dargestellt ist, weist die Auffangvorrichtung eine erste Verstelleinrichtung 90 auf, mit der beide Prallplattensegmente 15A und 15B gemeinsam innerhalb der Ladeöffnung 25 bewegt werden können. In dem dargestellten Ausführungsbeispiel handelt es sich dabei um eine oder mehrere angetriebene Scherenkonstruktionen, die über eine Stützrolle 92 auf der Grundplatte 18 verfahrbar sind. Das untere Prallplattensegment 15B wird direkt über diese Scherenkonstruktion bewegt. Zwischen die Scherenkonstruktion und das zweite Prallplattensegment 15A ist ein weiterer Verstellantrieb 91 geschaltet, mit dem das zweite Prallplattensegment 15A unabhängig von dem ersten Prallplattensegment bewegt werden kann.

Ein Prallplattensegment ist am vorderen Ende der jeweiligen Verstelleinrichtung gelenkig angebracht, so dass es wenigstens um eine Achse gekippt werden kann. Ferner kann jeweils ein Antrieb vorgesehen sein, um ein Plattensegment zu kippen.

Ein Prallplattensegment ist zweckmäßigerweise auf der den Trägern der Vorrichtung zugewandten Seite mit einem stoßdämpfenden Material versehen, um den Aufprall von Gegenständen auf diese Fläche abzudämpfen.
In einem in den Figuren nicht dargestellten Ausführungsbeispiel der Erfindung ist an dem unteren Prallplattensegment 15B ferner ein Mittel zur Abstützung des Segments auf der Grundplatte 18 und dem Behälterboden angebracht. Dabei kann es sich beispielsweise um eine Rolle handeln, mit der sich das untere Prallplattensegment auf der Grundplatte und dem Behälterboden bewegen kann.

In den in den Figuren 1-13 dargestellten Ausführungsbeispielen umfasst die Auffangvorrichtung zwei Prallplattensegmente, die übereinander angeordnet sind. Es besteht die Möglichkeit, in der Höhe weitere Segmente vorzusehen. Ferner können zusätzlich mehrere Segmente nebeneinander angeordnet werden, so dass eine Prallplatte beispielsweise aus vier Segmenten besteht, die in zwei übereinander liegenden Reihen aus jeweils zwei Plattensegmenten angeordnet sind. Prallplatten mit einer höheren Anzahl an Plattensegmenten können ebenfalls vorteilhaft sein.

Werden mehrere Prallplattensegmente nebeneinander angeordnet, kann es vorteilhaft sein, die Breite der so gebildeten Prallplatte ebenfalls variabel auszugestalten, indem die Prallplattensegmente durch entsprechende Verstelleinrichtungen auch quer zur Ladeöffnung 25 des Behälters verfahren werden können.

In der Ruheposition der Prallplatte sind die beiden Prallplattensegmente des Ausführungsbeispiels von Fig. 1 in ihrem Randbereich versetzt zueinander angeordnet, so dass sie sich leicht überlappen. In einem besonders bevorzugten Ausführungsbeispiel der Erfindung ist ein Prallplattensegment dünner als das andere ausgebildet. Am Rand des dickeren Prallplattensegmentes kann so eine Art Nut ausgeformt werden, in welche sich das andere Prallplattensegment in der Ruheposition der Vorrichtung einschiebt.

In der in Fig. 1 dargestellten Ruheposition der Prallplatte sind die beiden Prallplattensegmente 15A und 15B auf diese Art ineinander geschoben, wobei sie eine Prallplattenfläche bilden, deren Höhe ungefähr der Höhe der Ladeöffnung eines Wechselbehälters entspricht. Die Breite der Prallplatte entspricht ungefähr der Breite der Ladeöffnung 25 eines Wechselbehälters 20, so dass die Prallplatte in die Ladeöffnung verfahren werden kann.

In der Ruheposition ist die gesamte Auffangvorrichtung vorzugsweise entlang der Führung 19 nach unten verfahren, so dass der Abstand zwischen dem Gebäude und der Hauptachse durch eine Abdeckung 40 abgedeckt werden kann. Die Auffangvorrichtung kann jedoch auch zur Seite oder nach hinten verfahren oder um eine senkrechte Achse gedreht werden, um den Zugang zu dem Wechselbehälter zu ermöglichen.

Wird ein Wechselbehälter 20 mit einem Fahrzeug an die erfindungsgemäße Entladevorrichtung herangefahren, sollte der Wechselbehälter möglichst so abgestellt werden, dass dieser relativ genau positioniert zur Entladevorrichtung steht. Dies kann gegebenenfalls durch eine horizontale Verschiebung des Auflagers 12 entlang der Hauptachse 13 erleichtert werden. Der heckseitige Bodenbereich des Wechselbehälters wird dann auf dem unteren Schenkel des Auflagers 12 abgestellt. Der Wechselbehälter sollte ferner an den vertikalen Schenkel des Auflagers 12 anstoßen, wodurch gewährleistet ist, dass der Behälter auf dem ganzen Auflager aufliegt. Die Stützfüße 23 des.Wechselbehälters 20 können am Wechselbehälter verbleiben, sie können jedoch auch manuell abmontiert werden.

Ist der Wechselbehälter positioniert, werden die Träger 11A und 11B horizontal entlang der Hauptachse 13 auf den Behälter zu verschoben, bis sie eine vorbestimmte Position am Behälter erreicht haben. Daraufhin werden die Stützgreifer 52 der Greifeinrichtungen 50 und 50' an den Trägern unter den Behälterboden 26 geschwenkt. In dieser Position können die Stützgreifer arretiert werden.

Die Abdeckung 40 ragt in diesem Betriebszustand wenigstens bis zum Auflager 12, so dass Personen an den Behälter herantreten und das Heckrollo 21 öffnen können. Personen können so ferner eine Transportsicherung innerhalb des Behälters entfernen, um eine Entladung zu ermöglichen. Die Abdeckung 40 liegt vorzugsweise auf einer Ebene mit dem Behälterboden, so dass sich eine durchgehende Fläche ergibt, auf der Rollwagen oder Hubwagen ohne Stufe bewegt werden können. Wird ein Wechselbehälter mit einer Doppelflügeltür entladen, sollten die beiden Flügeltüren bereits vor Einbringung des Wechselbehälters in die Entladevorrichtung geöffnet worden sein.

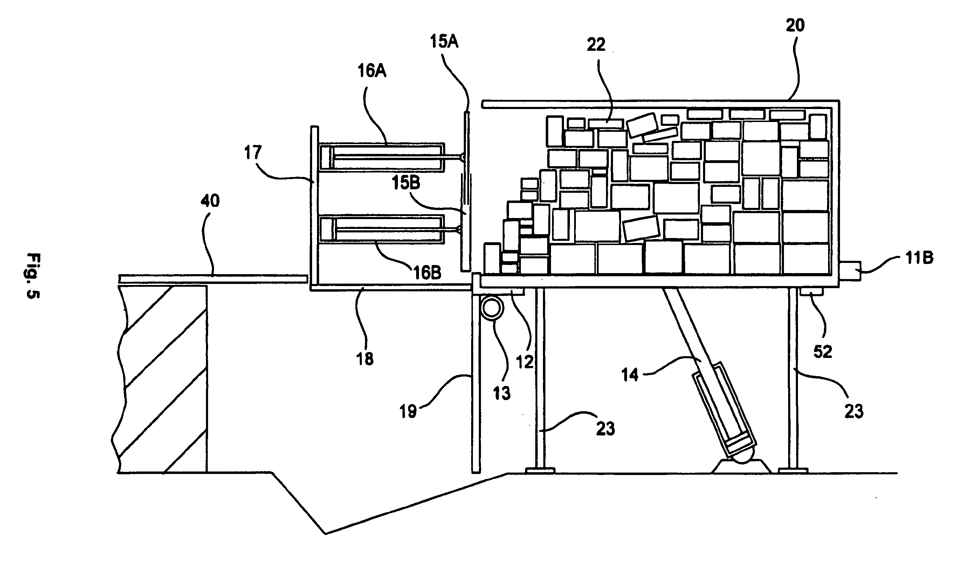

Im nächsten Schritt wird die Abdeckung 40 in Richtung des Gebäudes zurückgezogen, so dass die Auffangvorrichtung mittels eines Antriebs entlang der Führung 19 nach oben in die Betriebsposition verfahren werden kann. Dieser Vorgang ist in Fig. 5 dargestellt. Die Prallplatte wird dabei soweit nach oben verfahren, dass sie die Ladeöffnung 25 verdeckt, die sich durch das Öffnen des Heckrollos 21 ergeben hat.

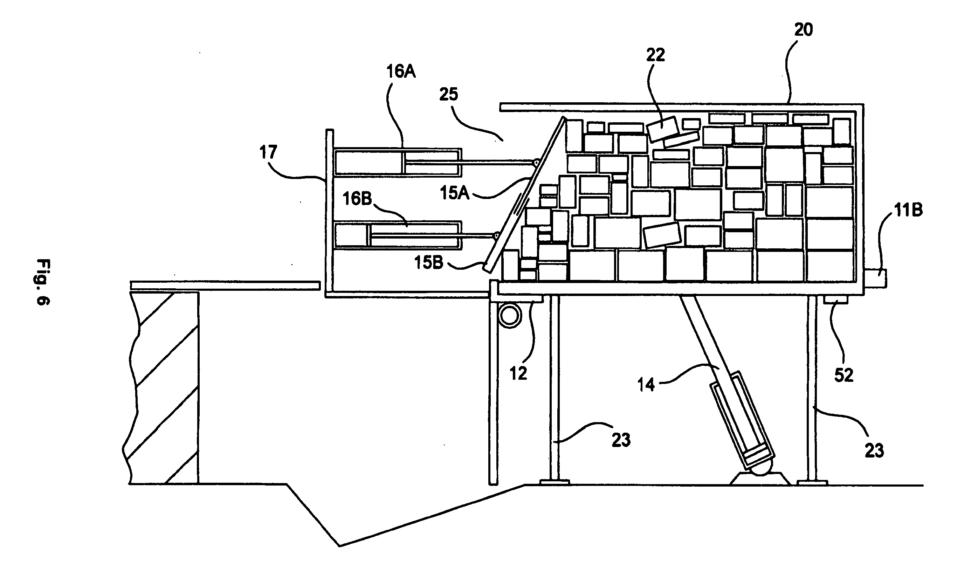

In Fig. 6 ist der nächste Schritt dargestellt, bei dem die einzelnen Prallplattensegmente 15A und 15B mittels der Verstelleinrichtungen 16A und 16B in den Laderaum des Behälters verfahren werden. Ist der Wechselbehälter nicht bis zum vorderen Ende befüllt, kann die Prallplatte mit der Rückplatte 17 zuvor in Richtung des Wechselbehälters verfahren werden, um die zusätzliche Entfernung zu überbrücken. Dann werden die einzelnen Segmente unterschiedlich weit in den Laderaum geschoben. Zuerst erfolgt dafür eine lineare Verschiebung der gesamten Prallplatte, bis das erste Ladegut erreicht ist. Danach wird üblicherweise das obere Prallplattensegment weiter in den Laderaum hinein geschoben, wobei die Plattensegmente automatisch in ihrer gelenkigen Aufhängung kippen und sich dem Stapel an Gegenständen anpassen. Durch die Kippbewegung vergrößert sich die Fläche der gesamten Prallplatte, da sich der Versatz der Plattensegmente zueinander reduziert. Dadurch kann die gesamte vordere Fläche der gestapelten Gegenstände 22 mit der Prallplatte abgedeckt werden, auch wenn diese vordere Fläche aufgrund der Stapelung schräg ist.

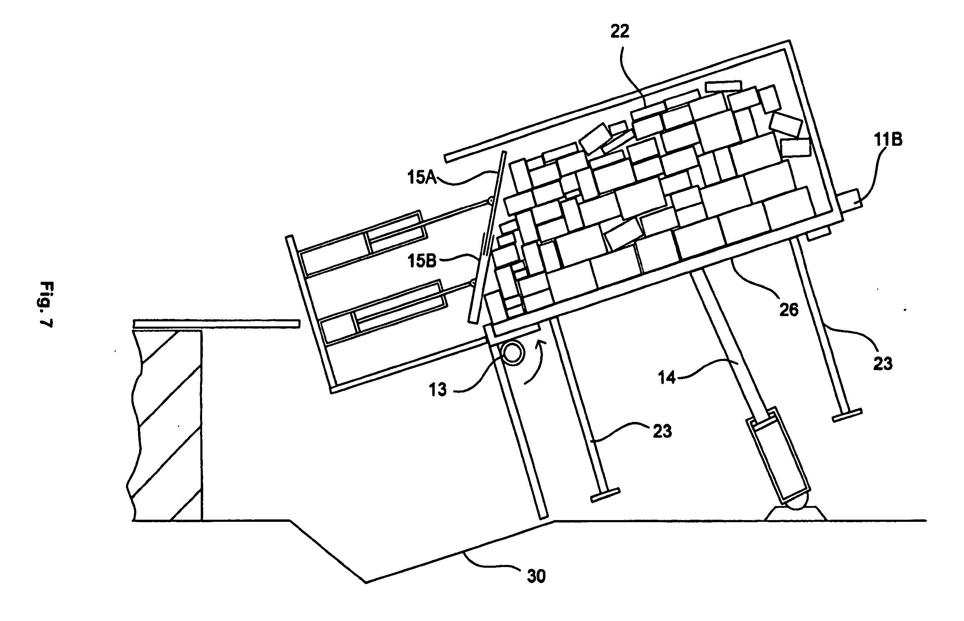

Die Träger 11A und 11B werden nun mit den Hubeinrichtungen 14, 14' angehoben, wodurch der Wechselbehälter 20 auf dem Auflager 12 um die Hauptachse 13 gekippt wird, wie es in Fig. 7 dargestellt ist. Damit die gesamte Auffangvorrichtung mit Prallplatte und Führung 19 mitgekippt werden kann, kann es erforderlich sein, im Boden eine entsprechende Bodensenke 30 vorzusehen, in welcher die Führungsschiene 19 geschwenkt werden kann.

Beim Kippvorgang rutschen die Gegenstände 22 innerhalb des Laderaumes des Behälters 20 in Richtung der Prallplatte und werden dort abgefangen. Da die Prallplattensegmente vorher schon dicht an der Vorderfront der Gegenstände anlagen, ist der Rutschweg der Gegenstände auf die Prallplatte relativ gering. Zusätzlich wird der Aufprall der Gegenstände auf die Prallplatte durch das stoßdämpfende Material auf dieser Seite der Prallplatte abgemildert. Die Gegenstände werden beim Kippvorgang somit nicht beschädigt.

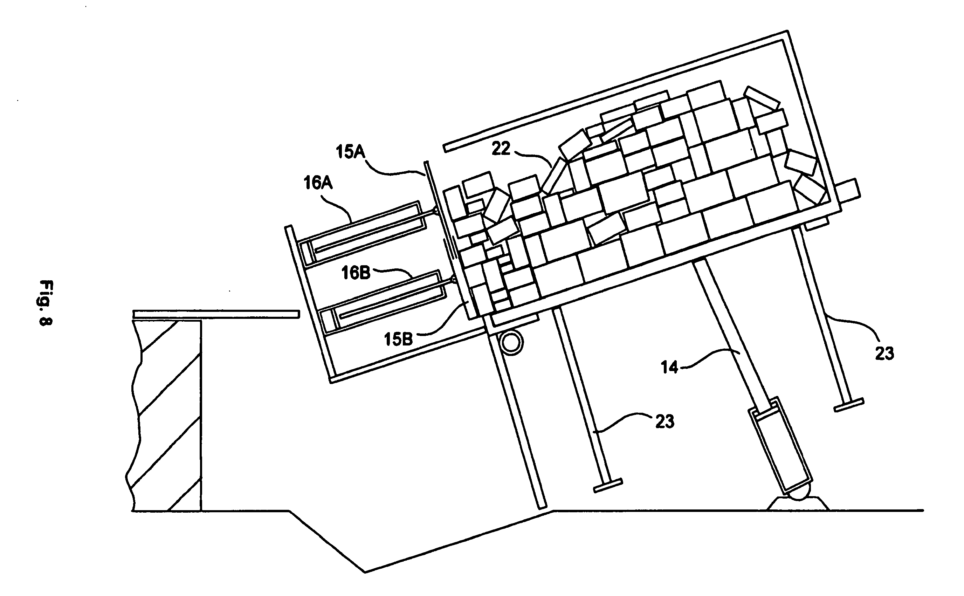

Im nächsten Schritt werden die Prallplattensegmente 15A und 15B mit den Verstelleinrichtungen 16A und 16B wieder aus der Ladeöffnung 26 des Behälters zurückgezogen. Dies ist in Fig. 8 dargestellt, wobei ersichtlich ist, dass die Prallplattensegmente bei diesem Vorgang wieder ineinander geschoben werden und die Fläche der Prallplatte somit wieder in die Ladeöffnung passt. Wurde die gesamte Prallplatte zuvor mit der Rückplatte 17 in Richtung des Wechselbehälters verfahren, wird sie nun wieder in die andere Richtung zurückgefahren. Dabei rutschen die oberen Gegenstände zusammen mit der Prallplatte weiter in Richtung der Ladeöffnung. Die Gegenstände werden dabei jedoch von der Prallplatte abgestützt, so dass sich auch bei diesem Vorgang keine Beschädigungen an den Gegenständen ergeben.

Ist die Prallplatte wieder in ihrer Ausgangsposition angelangt, in welcher die Prallplatte in einem rechten Winkel zum Behälterboden steht, befindet sie sich vor der Ladeöffnung 25 des Behälters und vor dem Auflager 12 der Entladevorrichtung. Die Gegenstände können somit bereits über das Auflager hinweg rutschen und werden dort von der Prallplatte gehalten.

Nun wird ein geeignetes Förderband an die Entladevorrichtung herangefahren. In einem zweckmäßigen Ausführungsbeispiel der Erfindung handelt es sich dabei um ein teleskopartiges erstes Förderband 60, das in der Länge variabel ist. Dieses Förderband schließt sich an ein zweites Förderband 61 an, das schwenkbar ausgeführt ist. Mit dieser Förderbandkombination können Unterschiede im Abstand zum Wechselbehälter und in der Höhe der zu entladenden Gegenstände ausgeglichen werden.

Das Förderband hat zweckmäßigerweise wenigstens die Breite des Wechselbehälters, um alle herausfallenden Gegenstände auffangen zu können. In einem weiteren möglichen Ausführungsbeispiel der Erfindung ist oberhalb des Förderbands ein Trichter vorgesehen, so dass die aus dem Wechselbehälter herausfallenden Gegenstände auf das Förderband gelenkt werden.

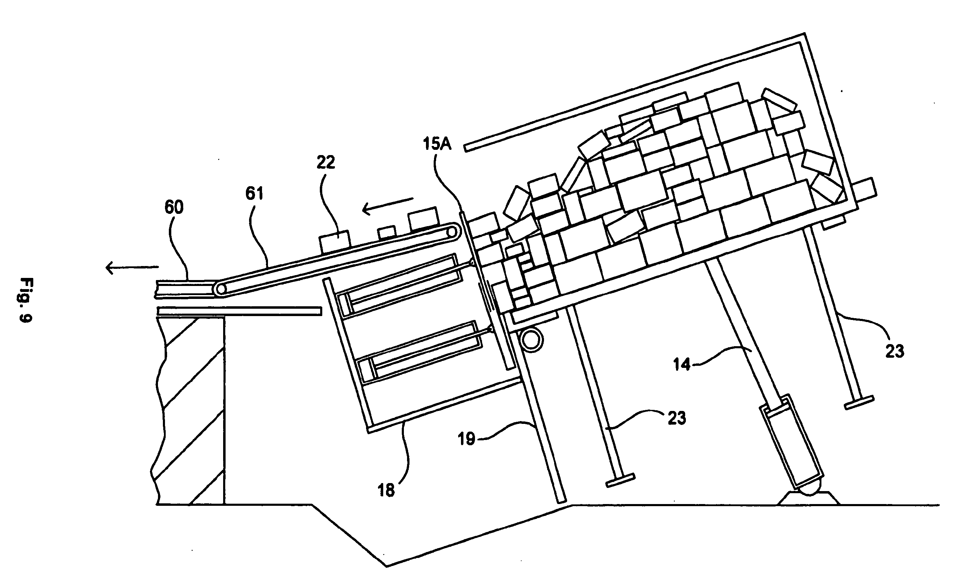

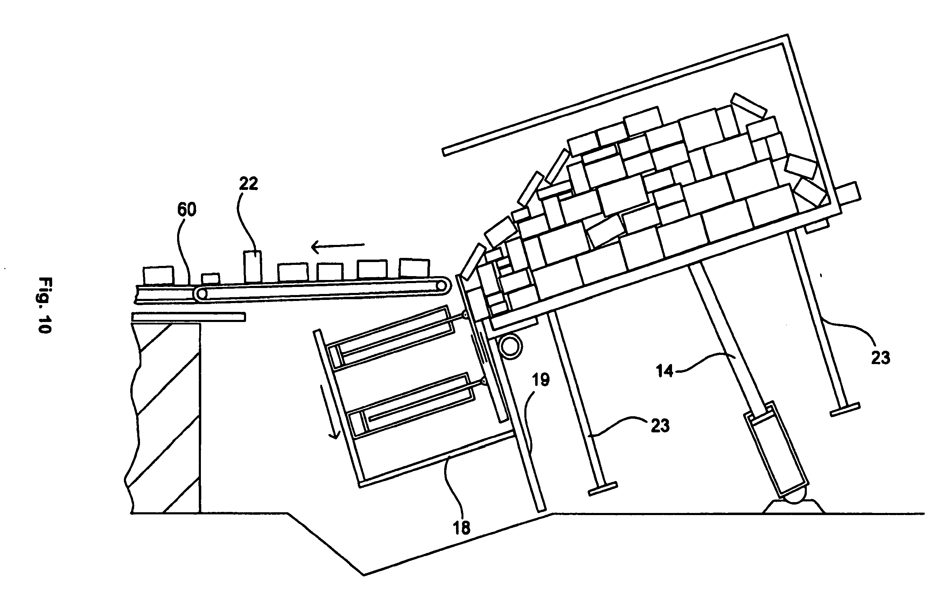

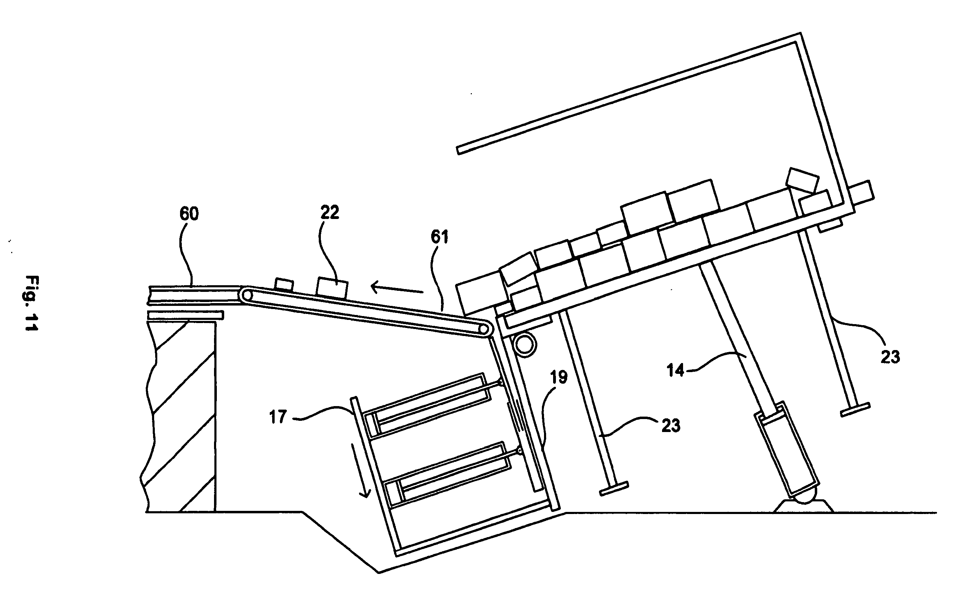

Das Förderband wird unterhalb der oberen Kante der Prallplatte positioniert und die Prallplatte daraufhin entlang der Führung 19 ein bestimmtes Maß nach unten verfahren. Dies ist in Fig. 9 dargestellt. Die Gegenstände der oberen Lagen können nun über die obere Kante der Prallplatte hinwegrutschen und fallen auf das Förderband, mit dem sie in das Innere des Gebäudes abtransportiert werden. Sobald keine Gegenstände mehr auf das Förderband fallen, wird die Prallplatte um ein weiteres Stück nach unten verfahren und weitere Lagen an Gegenständen können über die obere Kante der Prallplatte rutschen und abtransportiert werden. Dazu wird die Länge des teleskopartigen ersten Förderbandes 60 und der Winkel des schwenkbaren Förderbandes 61 so angepasst, dass sich das freie Ende des schwenkbaren Förderbandes wieder unterhalb der oberen Kante der Prallplatte befindet. Dieser Vorgang ist in den Figuren 10 und 11 dargestellt. Die Stellung der Förderbänder kann dabei manuell oder durch eine Sensorik angepasst werden.

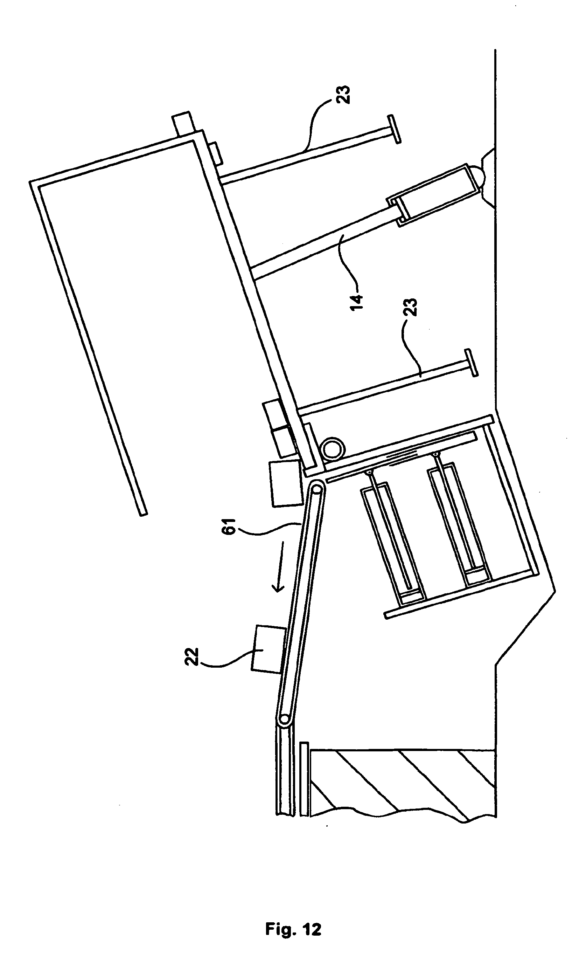

In Fig. 12 sind bereits fast alle Gegenstände aus dem Behälter gerutscht und wurden abtransportiert. Um das weitere Rutschen der Gegenstände zu unterstützen, kann der Wechselbehälter beim Herunterfahren der Prallplatte weiter gekippt werden. Sowohl die Abwärtsbewegung der Prallplatte als auch die Kippbewegung des Behälters können dabei kontinuierlich oder stufenweise erfolgen. Ferner kann über die Hubeinrichtungen eine Vibration in den Behälter eingeleitet werden. So können beispielsweise verkeilte Gegenstände gelöst werden.

Ist der Behälter vollständig entleert, werden die Träger 11A und 11B mittels der Hubeinrichtungen 14 und 14' wieder abgesenkt und der Wechselbehälter somit in seine Ursprungsposition zurückgeführt. Von dort kann er wieder abtransportiert werden, nachdem die Stützgreifer 52 der Greifeinrichtungen 50, 50' wieder vom Behälterboden weg geschwenkt und die Träger 11A und 11B nach außen verfahren wurden. Vorzugsweise wird vor dem Abtransport des Wechselbehälters die Abdeckung 40 wieder bis an das Auflager 12 herangefahren, damit eine Bedienperson die Abdeckung betreten und das Heckrollo 21 schließen kann. Alternativ kann der Wechselbehälter über die Abdeckung 40 mit neuen Gegenständen befüllt werden, bevor er verschlossen und wieder abtransportiert wird.

In Fig. 13 ist ein weiteres Ausführungsbeispiel der Erfindung dargestellt, bei dem ein Wechselbehälter nicht über Träger und daran angreifende Hubeinrichtungen, sondern über zwei Seil- oder Kettenzüge 14,14' angehoben wird. Ein Seilzug wird jeweils manuell am Wechselbehälter selbst eingehakt. Wird die erfindungsgemäße Entladevorrichtung in einer Halle eines Gebäudes errichtet, kann der Seilzug an der Decke der Halle angebracht sein. Wird sie vor einem Gebäude errichtet, ist beispielsweise eine geeignete Stahlkonstruktion vorzusehen.

In Fig. 14 ist ein alternatives Ausführungsbeispiel der Erfindung dargestellt, bei dem die Auffangvorrichtung der Entladevorrichtung in Form eines Luftsacks 80 ausgebildet ist. Der Luftsack steht in Verbindung mit einer Druckluftversorgung 81, welche an der Rückplatte 17 der Auffangvorrichtung angebracht ist. Die Rückplatte 17 ist wiederum auf der Grundplatte 18 angebracht und diese Grundplatte kann zusammen mit dem Luftsack entlang der Führung 19 verfahren werden.

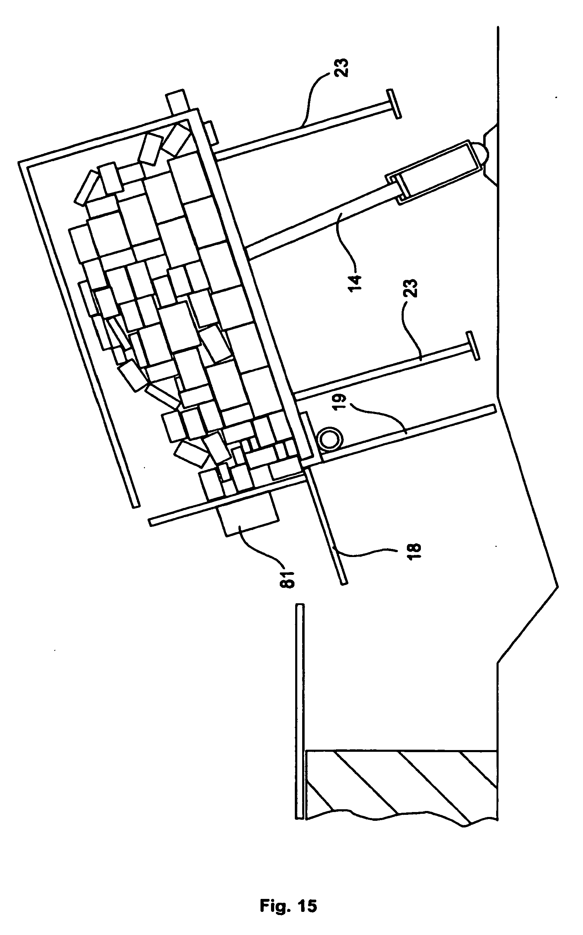

Der Luftsack 80 ist luftdicht ausgebildet und mit der Druckluftversorgung 81 kann ein gasförmiges Medium wie vorzugsweise Luft in den Sack geblasen oder aus diesem herausgesaugt bzw. abgelassen werden. Beim Ablassen des gasförmigen Mediums wird der Luftsack vorzugsweise soweit in die Rückplatte 17 eingezogen, dass er sich nicht mehr vor der Platte aufwölbt. Dieser Zustand ist schematisch in Fig. 15 dargestellt.

In der Ruheposition befindet sich die Auffangvorrichtung mit dem Luftsack ebenfalls unter der Abdeckung 40. Sie kann jedoch auch zur Seite oder nach hinten verfahren oder um eine senkrechte Achse gedreht werden, um den Zugang zum Wechselbehälter frei zu geben. Im Betrieb wird die Rückplatte mit dem Luftsack in die Ladeöffnung 26 des Wechselbehälters verfahren und der Luftsack dort aufgeblasen, bis er an den Vorderfronten der Gegenstände 22 anliegt. Der Luftsack weitet sich somit im Sinne der Erfindung räumlich in die Ladeöffnung 25 aus. Dabei wird der Luftsack vorzugsweise nicht vollständig, sondern nur teilweise befüllt, damit er sich an die Kontur der vorderen Gegenstände anpassen kann.

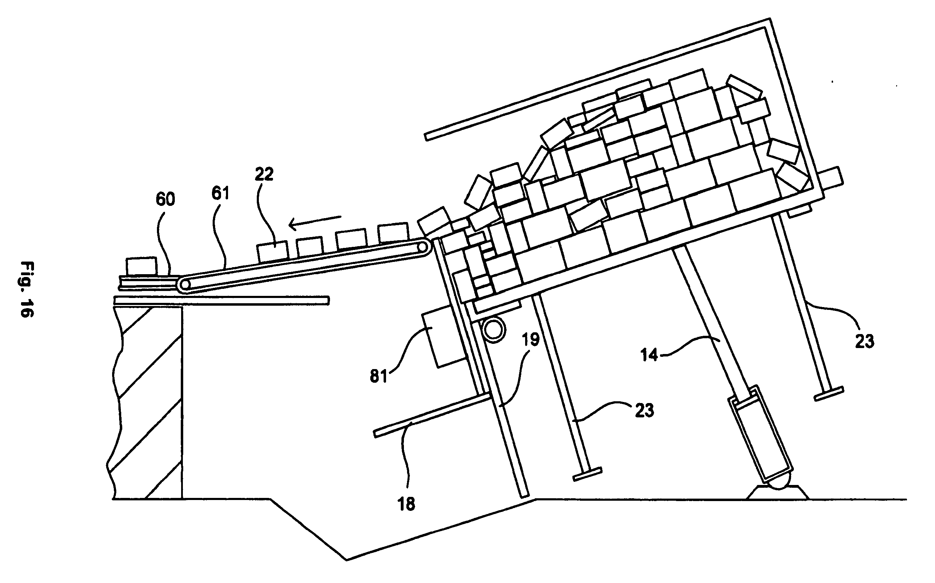

Der Wechselbehälter wird nun auf die zuvor beschriebene Weise gekippt und die Pakete rutschen auf den Luftsack zu, wodurch ihr Fall abgefangen wird. Aus dem Luftsack wird nun Luft abgelassen bzw. abgesaugt, wodurch die Gegenstände weiter rutschen und nun an der Rückplatte 17 anliegen, welche so die Funktion einer Prallplatte übernimmt, da der Luftsack vorzugsweise vollständig in die Rückplatte 17 eingezogen wird. Die Rückplatte wird entlang der Grundplatte 18 aus der Ladeöffnung herausgefahren und nun wie die zuvor beschriebene Prallplatte entlang der Führung 19 schrittweise nach unten verfahren und die über den oberen Rand der Rückplatte herausrutschenden Gegenstände von Förderbändern abtransportiert. Dieser Vorgang ist in Fig. 16 dargestellt.

In einem in den Figuren nicht dargestellten Ausführungsbeispiel der Erfindung wird eine segmentierte Prallplatte mit einem oder mehreren Luftsäcken kombiniert. Jedes Prallplattensegment verfügt dabei über einen Luftsack mit einer Druckluftversorgung, wobei die Luftsäcke dabei jedoch wesentlich kleiner ausgebildet sind. Die Prallplattensegmente werden, wie zuvor beschrieben, in die Ladeöffnung verfahren und gekippt. Um die Gegenstände weicher abfangen zu können, werden nun vor jedem Prallplattensegment Luftkissen aufgeblasen und der Wechselbehälter gekippt. Beim Kippvorgang werden die Gegenstände durch die schräg stehenden Prallplattensegmente und die Luftkissen abgefangen. Danach werden die Luftkissen wieder eingezogen und die Prallplattensegmente in ihre Ausgangsposition verfahren, bevor der Entladevorgang durch Absenken der Prallplatte erfolgt.

### Bezugszeichenliste:

- 10: Entladevorrichtung
- 11A,11B: Träger, Tragrohr
- 12: Auflager
- 13: Hauptachse
- 14,14': Kippeinrichtung, Hubeinrichtung, Seil-/ Kettenzug
- 15A,15B: Prallplattensegment
- 16A,16B: Verstelleinrichtung, Hubeinrichtung, Scherenkonstruktion
- 17: Rückplatte
- 18: Grundplatte
- 19: Führung

- 20: Wechselbehälter
- 21: Heckrollo
- 22: Gegenstand, Paket
- 23: Stützfuß
- 24: Einhaköffnung, Iso-Corner-Casting
- 25: Ladeöffnung
- 26: Behälterboden

- 30: Bodensenke
- 40: Abdeckung

- 50,50': Greifeinrichtung
- 51: Ausleger
- 52: Stützgreifer
- 53: Aufhängung
- 54: Verstelleinrichtung, Antrieb

- 60: Förderband, teleskopartig
- 61: Förderband, schwenkbar

- 70,70': Seitenführung

- 80: Luftsack
- 81: Druckluftversorgung

- 90: Scherenkonstruktion, Verstelleinrichtung
- 91: Verstellantrieb
- 92: Stützrolle

## Patentansprüche

1. Vorrichtung (10) zur Entladung von Gegenständen (22), insbesondere Postpaketen, aus einem Behälter (20) mit wenigstens einer Ladeöffnung (25), wobei die Vorrichtung (10) eine Aufnahmeeinrichtung (11A;11B, 12) zur Aufnahme des Behälters (20) und eine Kippeinrichtung (14;14') zum Kippen eines aufgenommenen Behälters (20) um eine horizontale Achse (13) umfasst,
**dadurch gekennzeichnet,**
**dass** die Vorrichtung (10) eine Auffangvorrichtung (15A;15B) aufweist, die Mittel zur räumlichen Ausweitung der Auffangvorrichtung in die Ladeöffnung (25) hinein aufweist, und dass die Auffangvorrichtung ferner über eine Führung (19) in eine Position unterhalb des Behälterbodens (26) eines in der Vorrichtung aufgenommenen Behälters (20) verfahrbar ist, in der die Auffangvorrichtung die Ladeöffnung (25) nicht verdeckt.

2. Vorrichtung nach Anspruch 1,
**dadurch gekennzeichnet,**
**dass** die Auffangvorrichtung über die Führung (19) in einem rechten Winkel zum Behälterboden (26) eines in der Vorrichtung aufgenommenen Behälters (20) in eine Position unterhalb des Behälterbodens (26) verfahrbar ist, in der die Auffangvorrichtung die Ladeöffnung (25) nicht verdeckt.

3. Vorrichtung nach einem oder beiden der Ansprüche 1 und 2,
**dadurch gekennzeichnet,**
**dass** die Auffangvorrichtung eine Prallplatte umfasst, die wenigstens zwei Prallplattensegmente (15A; 15B) aufweist, die vom Behälterboden (26) eines in der Vorrichtung aufgenommenen Behälters (20) aus gesehen übereinander angeordnet sind, wobei die Prallplattensegmente (15A;15B) über eine oder mehrere Verstelleinrichtungen (16A;16B; 90;91) innerhalb der Ladeöffnung (25) bewegbar sind und die Prallplattensegmente (15A,15B) kippbar an der zugehörigen Verstelleinrichtung (16A;16B;90;91) gelagert sind.

4. Vorrichtung nach Anspruch 3,
**dadurch gekennzeichnet,**
**dass** die Prallplattensegmente (15A;15B) unabhängig voneinander über eine dem jeweiligen Prallplattensegment zugeordnete Verstelleinrichtung (16A;16B) innerhalb der Ladeöffnung (25) bewegbar sind.

5. Vorrichtung nach Anspruch 3,
**dadurch gekennzeichnet,**
**dass** beide Prallplattensegmente (15A;15B) über eine gemeinsame Verstelleinrichtung (90) innerhalb der Ladeöffnung (25) bewegbar sind, wobei ein erstes Prallplattensegment (15B) in direkter Verbindung mit dieser Verstelleinrichtung (90) steht, während zwischen diese Verstelleinrichtung (90) und ein zweites Prallplattensegment (15A) ein weiterer Verstellantrieb (91) geschaltet ist.

6. Vorrichtung (10) nach einem oder beiden der Ansprüche 1 und 2,
**dadurch gekennzeichnet,**
**dass** die Auffangvorrichtung (10) einen Luftsack (80) umfasst, der mittels einer Druckluftversorgung (81) mit einem gasförmigen Medium befüllbar ist, wobei der Luftsack (80) so angeordnet ist, dass er bei der Befüllung mit einem gasförmigen Medium in Richtung des Innenraumes eines in der Vorrichtung aufgenommenen Behälters (20) aufblähbar ist.

7. Vorrichtung (10) nach einem oder mehreren der Ansprüche 1 bis 6,
**dadurch gekennzeichnet,**
**dass** die Aufnahmeeinrichtung zur Aufnahme des Behälters (20) wenigstens ein Auflager (12) umfasst, welches sich entlang einer Hauptachse (13) erstreckt und um diese Hauptachse (13) schwenkbar gelagert ist.

8. Verfahren zur Entladung von Gegenständen (22), insbesondere Postpaketen, aus einem Behälter (20) mit wenigstens einer Ladeöffnung (25), bei dem der Behälter (20) in eine Aufnahmeeinrichtung (11A;11B;12) zur Aufnahme des Behälters (20) eingebracht wird und der so aufgenommene Behälter (20) mittels einer Kippeinrichtung (14;14') um eine horizontale Achse (13) gekippt wird,
**dadurch gekennzeichnet,**
**dass** vor dem Kippvorgang eine räumliche Ausweitung einer Auffangvorrichtung (15A;15B) in die Ladeöffnung (25) des in der Aufnahmeeinrichtung aufgenommenen Behälters (20) erfolgt, und dass nach dem Kippvorgang die räumliche Ausweitung der Auffangvorrichtung wieder zurückgeführt wird, bis sich die Auffangvorrichtung außerhalb des Behälters (20) befindet, und dass die Auffangvorrichtung daraufhin in eine Position unterhalb des Behälterbodens (26) eines in der Vorrichtung aufgenommenen Behälters (20) verfahren wird, in der die Auffangvorrichtung die Ladeöffnung (25) nicht verdeckt.

9. Verfahren nach Anspruch 8,
**dadurch gekennzeichnet,**
**dass** die Auffangvorrichtung über die Führung (19) in einem rechten Winkel zum Behälterboden (26) eines in der Vorrichtung aufgenommenen Behälters (20) in eine Position unterhalb des Behälterbodens (26) verfahren wird, in der die Auffangvorrichtung die Ladeöffnung (26) nicht verdeckt.

10. Verfahren nach einem oder beiden der Ansprüche 8 und 9,
**dadurch gekennzeichnet,**
**dass** die Auffangvorrichtung (10) eine Prallplatte umfasst, die wenigstens zwei Prallplattensegmente (15A;15B) aufweist, die vom Behälterboden (26) eines in der Vorrichtung aufgenommenen Behälters (20) aus gesehen übereinander angeordnet sind, und die Prallplattensegmente (15A;15B) für eine räumliche Ausweitung und die Rückführung der räumlichen Ausweitung der Auffangvorrichtung über eine oder mehrere Verstelleinrichtungen (16A;16B;90;91) innerhalb der Ladeöffnung (25) bewegt werden.

11. Verfahren nach Anspruch 10,
**dadurch gekennzeichnet,**
**dass** die Prallplattensegmente (15A;15B) unabhängig voneinander über eine dem jeweiligen Prallplattensegment zugeordnete Verstelleinrichtung (16A;16B) innerhalb der Ladeöffnung (25) bewegt werden.

12. Verfahren nach Anspruch 11,
**dadurch gekennzeichnet,**
**dass** beide Prallplattensegmente (15A;15B) über eine gemeinsame Verstelleinrichtung (90) innerhalb der Ladeöffnung (25) bewegt werden, wobei ein erstes Prallplattensegment (15B) durch eine direkte Verbindung mit dieser Verstelleinrichtung (90) bewegt wird, während ein zweites Prallplattensegment (15A) zusätzlich über einen zwischen diese Verstelleinrichtung (90) und das zweite Prallplattensegment (15A) geschalteten weiteren Verstellantrieb (91) bewegt wird.

13. Verfahren nach einem oder beiden der Ansprüche 8 und 9,
**dadurch gekennzeichnet,**
**dass** die Auffangvorrichtung (10) einen Luftsack (80) umfasst, der für eine räumliche Ausweitung der Auffangvorrichtung mittels einer Druckluftversorgung (81) mit einem gasförmigen Medium befüllt wird, wobei sich der Luftsack (80) bei der Befüllung mit einem gasförmigen Medium in Richtung des Innenraums des Behälters (20) aufbläht, und dass für eine Rückführung der räumlichen Ausweitung der Auffangvorrichtung das gasförmige Medium aus dem Luftsack abgelassen oder abgesaugt wird.

14. Verfahren nach einem oder mehreren der Ansprüche 8 bis 13,
**dadurch gekennzeichnet,**
**dass** ein Behälter (20) auf einem Auflager (12) abgesetzt und die Auffangvorrichtung räumlich in die Ladeöffnung (25) des Behälters (20) ausgeweitet wird, woraufhin der Behälter durch eine Kippeinrichtung (14;14') angehoben und um eine horizontale Hauptachse (13) gekippt wird, und die räumliche Ausweitung der Auffangvorrichtung zurückgeführt wird, bis sich die Auffangvorrichtung außerhalb des Behälters (20) befindet, und dass die Auffangvorrichtung daraufhin in eine Position unterhalb des Behälterbodens (26) des in der Vorrichtung aufgenommenen Behälters (20) verfahren wird, in der die Auffangvorrichtung die Ladeöffnung (25) nicht verdeckt.

15. Verfahren nach Anspruch 14,
**dadurch gekennzeichnet,**
**dass** nach dem Absetzen des Behälters (20) auf dem Auflager (12) zwei Träger (11A;11 B) auf den Behälter (20) zu bewegt werden, und an jedem der Träger (11A;11 B) wenigstens eine Greifeinrichtung (50;50') mit jeweils einem Stützgreifer (52) unterhalb des Behälterbodens (26) positioniert wird, und die Kippeinrichtung (14;14') zum Anheben des Behälters (20) eine Kraft an den Trägern (11A;11B) einleitet.

## Claims

1. A device (10) for unloading objects (22), especially postal parcels, from a container (20) with at least one loading opening (25), said device (10) comprising a holding device (11A, 11B, 12) to hold the container (20), and a tipping device (14, 14') to tip around a horizontal axis (13) a container (20) thus held,
**characterized in that**
the device (10) has a collecting device (15A, 15B) that has means for three-dimensionally expanding the collecting device into the loading opening (25), and **in that** the collecting device can also be moved along a guide (19) into a position below the bottom (26) of a container (20) that is held in the device, and in this position, the collecting device does not cover the loading opening (25).

2. The device according to Claim 1,
**characterized in that**
the collecting device can be moved along the guide (19) at a right angle to the bottom (26) of a container (20) held in the device into a position below the container bottom (26), and in this position, the collecting device does not cover the loading opening (25).

3. The device according to one or both of Claims 1 and 2,
**characterized in that**
the collecting device has a baffle plate with at least two baffle plate segments (15A; 15B) that are arranged one above the other, as seen from the bottom (26) of a container (20) held in the device, and the baffle plate segments (15A; 15B) can be moved by means of one or more adjustment devices (16A; 16B; 90; 91) inside the loading opening (25), and the baffle plate segments (15A; 15B) are mounted on the appertaining adjustment device (16A; 16B; 90: 91) so that they can tip.

4. The device according to Claim 3,
**characterized in that**
the baffle plate segments (15A; 15B) can be moved independently of each other inside the loading opening (25) by means of an adjustment device (16A; 16B) associated with the appertaining baffle plate segment.

5. The device according to Claim 3,
**characterized in that**
both baffle plate segments (15A; 15B) can be moved by means of a shared adjustment device (90) inside the loading opening (25), a first baffle plate segment (15B) being connected directly to this adjustment device (90), while another adjusting drive (91) is interconnected between this adjustment device (90) and a second baffle plate segment (15A).

6. The device (10) according to one of both of Claims 1 and 2,
**characterized in that**
the collecting device (10) comprises an air bag (80) that can be filled with a gaseous medium by means of a compressed air supply unit (81), the air bag (80) being arranged in such a way that, when it is filled with a gaseous medium, it can be inflated in the direction of the interior of a container (20) that is held in the device.

7. The device (10) according to one or more of Claims 1 to 6,
**characterized in that**
the holding device to hold the container (20) has at least one bracket (12) that extends along a main axis (13) and that is mounted so as to pivot around this main axis (13).

8. A method for unloading objects (22), especially postal parcels, from a container (20) with at least one loading opening (25), in which the container (20) is placed into a holding device (11A, 11B, 12) to hold the container (20), and the container (20) thus held is tipped by means of a tipping device (14, 14') around a horizontal axis (13),
**characterized in that**,
before the tipping procedure, a three-dimensional expansion takes place of a collecting device (15A, 15B) into the loading opening (25) of the container (20) held in the holding device, and **in that**, after the tipping procedure, the three-dimensional expansion of the collecting device is reversed until the collecting device is located outside of the container (20), and **in that** the collecting device is then moved into a position below the container bottom (26) of a container (20) that is held in the device, and in this position, the collecting device does not cover the loading opening (25).

9. The method according to Claim 8,
**characterized in that**
the collecting device is moved along the guide (19) at a right angle to the bottom (26) of a container (20) held in the device into a position below the container bottom (26), and in this position, the collecting device does not cover the loading opening (25).

10. The method according to one or both of Claims 8 and 9,
**characterized in that**
the collecting device (10) has a baffle plate with at least two baffle plate segments (15A; 15B) that, as seen from the bottom (26) of a container (20) held in the device, are arranged one above the other, and, for purposes of a three-dimensional expansion and the reversal of the three-dimensional expansion of the collecting device, the baffle plate segments (15A; 15B) are moved by means of one or more adjustment devices (16A; 16B; 90; 91) inside the loading opening (25).

11. The method according to Claim 10,
**characterized in that**
the baffle plate segments (15A; 15B) are moved independently of each other inside the loading opening (25) by means of an adjustment device (16A; 16B) associated with the appertaining baffle plate segment.

12. The method according to Claim 11,
**characterized in that**
both baffle plate segments (15A; 15B) are moved by means of a shared adjustment device (90) inside the loading opening (25), a first baffle plate segment (15B) being moved by a direct connection with this adjustment device (90), while a second baffle plate segment (15A) is additionally moved by means of another adjusting drive (91) that is interconnected between this adjustment device (90) and the second baffle plate segment (15A).

13. The method according to one or both of Claims 8 and 9,
**characterized in that**
the collecting device (10) comprises an air bag (80) that, for a three-dimensional expansion of the collecting device, is filled with a gaseous medium by means of a compressed-air supply unit (81), and, when the air bag (80) is filled with a gaseous medium, it is inflated in the direction of the interior of the container (20), and **in that** the gaseous medium is released from or sucked out of the air bag in order to reverse the three-dimensional expansion of the collecting device.

14. The method according to one or more of Claims 8 to 13,
**characterized in that**
a container (20) is placed onto a bracket (12) and the collecting device is expanded three-dimensionally into the loading opening (25) of the container (20), after which the container is lifted up by a tipping device (14, 14') and tipped around a horizontal main axis (13), and the three-dimensional expansion of the collecting device is reversed until the collecting device is located outside of the container (20), and **in that** the collecting device is then moved into a position below the container bottom (26) of the container (20) that is held in the device, and in this position, the collecting device does not cover the loading opening (25).

15. The method according to Claim 14,
**characterized in that**,
after the container (20) has been placed on the bracket (12), two beams (11A; 11B) are moved towards the container (20), and at least one gripping device (50; 50'), each with a support gripper (52), is positioned on each of the beams (11A; 11B) below the container bottom (26), and the tipping device (14; 14') applies a force onto the beams (11A; 11B) in order to lift the container (20).

## Revendications

1. Dispositif (10) pour décharger des objets (22), et plus particulièrement des colis postaux, d'un contenant (20) avec au moins une ouverture de chargement (25), le dispositif (10) comprenant un dispositif de logement (11A, 11 B, 12) pour recevoir le contenant (20) et un dispositif de basculement (14, 14') pour faire basculer autour d'un axe horizontal (13) un contenant logé (20), **caractérisé en ce que** le dispositif (10) comporte un dispositif de retenue (15A, 15B) qui comporte des moyens pour étendre le dispositif de retenue dans l'espace vers l'intérieur de l'ouverture de chargement (25) et **en ce que** le dispositif de retenue peut en outre être déplacé, par l'intermédiaire d'un guidage (19), vers une position en dessous du fond (26) d'un contenant (20) logé dans le dispositif, dans laquelle le dispositif de retenue n'occulte pas l'ouverture de chargement (25).

2. Dispositif selon la revendication 1, **caractérisé en ce que** le dispositif de retenue peut être déplacé, par l'intermédiaire du guidage (19), à angle droit par rapport au fond (26) d'un contenant (20) logé dans le dispositif, vers une position en dessous du fond (26) du contenant dans laquelle le dispositif de retenue n'occulte pas l'ouverture de chargement (25).

3. Dispositif selon l'une ou les deux revendications 1 et 2, **caractérisé en ce que** le dispositif de retenue comprend une plaque déflectrice qui comporte au moins deux segments de plaque déflectrice (15A ; 15B) qui, vus depuis le fond (26) d'un contenant (20) logé dans le dispositif, sont superposés, les segments de plaque déflectrice (15A ; 15B) pouvant être déplacés par l'intermédiaire d'un ou de plusieurs dispositifs de réglage (16A ; 16B ; 90 ; 91) dans l'ouverture de chargement (25) et les segments de plaque déflectrice (15A, 15B) étant disposés sur le dispositif de déplacement associé (16A ; 16B ; 90 ; 91) de manière à pouvoir basculer.

4. Dispositif selon la revendication 3, **caractérisé en ce que** les segments de plaque déflectrice (15A ; 15B) peuvent être déplacés indépendamment l'un de l'autre dans l'ouverture de chargement (25) par l'intermédiaire d'un dispositif de réglage (16A ; 16B) associé au segment de plaque déflectrice respectif.

5. Dispositif selon la revendication 3, **caractérisé en ce que** les deux segments de plaque déflectrice (15A ; 15B) peuvent être déplacés dans l'ouverture de chargement (25) par l'intermédiaire d'un dispositif de réglage commun (90), un premier segment de plaque déflectrice (15B) étant directement relié à ce dispositif de réglage (90) tandis qu'un autre organe de réglage (91) est monté entre ce dispositif de réglage (90) et un deuxième segment de plaque déflectrice (15A).

6. Dispositif (10) selon l'une ou les deux revendications 1 et 2, **caractérisé en ce que** le dispositif de retenue (10) comprend un sac gonflable (80) qui peut être rempli d'un fluide gazeux au moyen d'une alimentation en air comprimé (81), le sac gonflable (80) étant disposé de manière telle que, lors du remplissage avec un fluide gazeux, il peut être gonflé en direction de l'espace intérieur d'un contenant (20) logé dans le dispositif.

7. Dispositif (10) selon l'une ou plusieurs des revendications 1 à 6, **caractérisé en ce que** le dispositif de logement comprend, pour recevoir le contenant (20), au moins un appui (12) qui s'étend le long d'un axe principal (13) et est logé de manière à pouvoir pivoter autour de cet axe principal (13).

8. Procédé pour décharger des objets (22), et plus particulièrement des colis postaux, d'un contenant (20) avec au moins une ouverture de chargement (25), dans lequel le contenant (20) est inséré dans un dispositif de logement (11A, 11 B, 12) pour recevoir le contenant (20) et le contenant (20) ainsi logé est basculé autour d'un axe horizontal (13) au moyen d'un dispositif de basculement (14, 14'), **caractérisé en ce que**, avant l'opération de basculement, le dispositif de retenue (15A, 15B) soit étendu vers l'intérieur de l'ouverture de chargement (25) du contenant (20) logé dans le dispositif de logement, et **en ce que**, après l'opération de basculement, le dispositif de retenue étendu est ramené jusqu'à ce que le dispositif de retenue se trouve en dehors du contenant (20), et **en ce que** le dispositif de retenue est ensuite déplacé vers une position en dessous du fond (26) d'un contenant (20) logé dans le dispositif, dans laquelle le dispositif de retenue n'occulte pas l'ouverture de chargement (25).

9. Procédé selon la revendication 8, **caractérisé en ce que** le dispositif de retenue est déplacé, par l'intermédiaire du guidage (19), à angle droit par rapport au fond (26) d'un contenant (20) logé dans le dispositif, vers une position en dessous du fond (26) du contenant dans laquelle le dispositif de retenue n'occulte pas l'ouverture de chargement (25).

10. Procédé selon l'une ou les deux revendications 8 et 9, **caractérisé en ce que** le dispositif de retenue (10) comprend une plaque déflectrice qui comporte au moins deux segments de plaque déflectrice (15A ; 15B) qui, vus depuis le fond (26) d'un contenant (20) logé dans le dispositif, sont superposés, et **en ce que** les segments de plaque déflectrice (15A ; 15B) sont déplacés par l'intermédiaire d'un ou de plusieurs dispositifs de réglage (16A ; 16B ; 90 ; 91) dans l'ouverture de chargement (25) pour étendre le dispositif de retenue et pour le ramener le dispositif de retenue étendu.

11. Procédé selon la revendication 10, **caractérisé en ce que** les segments de plaque déflectrice (15A ; 15B) sont déplacés indépendamment l'un de l'autre dans l'ouverture de chargement (25) par l'intermédiaire d'un dispositif de réglage (16A ; 16B) associé au segment de plaque déflectrice respectif.

12. Procédé selon la revendication 11, **caractérisé en ce que** les deux segments de plaque déflectrice (15A ; 15B) sont déplacés dans l'ouverture de chargement (25) par l'intermédiaire d'un dispositif de réglage commun (90), un premier segment de plaque déflectrice (15B) étant directement relié à ce dispositif de réglage (90) tandis qu'un deuxième segment de plaque déflectrice (15A) est additionnellement déplacé par l'intermédiaire d'un autre organe de réglage (91) monté entre ce dispositif de réglage (90) et le deuxième segment de plaque déflectrice (15A) .

13. Procédé selon l'une ou les deux revendications 8 et 9, **caractérisé en ce que** le dispositif de retenue (10) comprend un sac gonflable (80) qui est rempli d'un fluide gazeux au moyen d'une alimentation en air comprimé (81) en vue d'étendre le dispositif de retenue, le sac gonflable (80), lors du remplissage avec un fluide gazeux, se gonflant en direction de l'espace intérieur du contenant (20), et **en ce que**, pour ramener le dispositif de retenue étendu, le fluide gazeux est évacué ou aspiré hors du sac gonflable.

14. Procédé selon l'une ou plusieurs des revendications 8 à 13, **caractérisé en ce qu'**un contenant (20) est posé sur un appui (12) et le dispositif de retenue est étendu vers l'intérieur de l'ouverture de chargement (25) du contenant (20), suite à quoi le contenant est soulevé par un dispositif de basculement (14 ; 14') et est basculé autour d'un axe horizontal principal (13), et le dispositif de retenue étendu est ramené jusqu'à ce que le dispositif de retenue se trouve en dehors du contenant (20), et **en ce que** le dispositif de retenue est ensuite déplacé vers une position en dessous du fond (26) du contenant (20) logé dans le dispositif, dans laquelle le dispositif de retenue n'occulte pas l'ouverture de chargement (25).

15. Procédé selon la revendication 14, **caractérisé en ce que**, après la pose du contenant (20) sur l'appui (12), deux supports (11A ; 11 B) sont déplacés vers le contenant (20), et, au niveau de chacun des supports (11A ; 11 B), au moins un dispositif de préhension (50 ; 50') avec respectivement un préhenseur de support (52) est positionné en dessous du fond (26) du contenant, et le dispositif de basculement (14 ; 14') introduit une force au niveau des supports (11A ; 11 B) pour soulever le contenant (20).
